# EUROPÄISCHE PATENTSCHRIFT

(11) **EP 1 395 985 B1**
(45) Veröffentlichungstag und Bekanntmachung des Hinweises auf die Patenterteilung: **06.09.2006**
(21) Anmeldenummer: 02702365.4
(22) Anmeldetag: 25.02.2002
(51) Int. Cl.: G11B 7/0065, G11B 7/24, G11B 7/0045, G03H 1/02

(54) **HOLOGRAPHISCHER DATENSPEICHER**
HOLOGRAPHIC DATA-STORAGE MEDIUM
MEMOIRE DE DONNEES HOLOGRAPHIQUE

(30) Priorität: 15.06.2001 DE 10128902
(43) Veröffentlichungstag der Anmeldung: 10.03.2004
(73) Patentinhaber: tesa scribos GmbH, 69126 Heidelberg (DE)
(72) Erfinder: LEIBER, Jörn, 22529 Hamburg (DE); BLAZEJEWSKI, Anna, 22527 Hamburg (DE); NOEHTE, Steffen, 69469 Weinheim (DE); STADLER, Stefan, 22359 Hamburg (DE); DIETRICH, Christoph, 69126 Heidelberg (DE); GERSPACH, Matthias, 69221 Dossenheim (DE)
(74) Vertreter: UEXKÜLL & STOLBERG
(86) Internationale Anmeldenummer: PCT/EP2002/001951
(87) Internationale Veröffentlichungsnummer: WO 2002/103689

(56) Entgegenhaltungen:
- WO-A-00/17864
- WO-A-02/15179
- DE-A- 3 723 522
- FR-A- 2 703 815
- US-A- 3 976 354

## Beschreibung

Die Erfindung betrifft einen holographischen Datenspeicher, der z.B. zum Speichern von Bilddaten wie Fotos, Logos, Schrift, usw., aber auch zum Speichern von anderen Daten verwendet werden kann.

In einem Hologramm ist über die Fläche des Hologramms verteilt optische Phaseninformation über ein Objekt enthalten, aus der sich bei Bestrahlung mit Licht, insbesondere kohärentem Licht von einem Laser, ein Bild des Objektes rekonstruieren lässt. Hologramme werden in der Technik auf vielfältige Weise genutzt, z.B. in Form von weitgehend fälschungssicheren Kennzeichnungen. Derartige Kennzeichnungen finden sich z.B. auf Kreditkarten oder Scheckkarten; sie zeigen als sogenannte Weißlicht-Hologramme auch bei Beleuchtung mit natürlichem Licht ein dreidimensionales Bild des dargestellten Objekts. Verbreitet sind photographisch hergestellte Hologramme sowie Prägehologramme, bei denen in die Oberfläche eines Werkstoffs eine Reliefstruktur eingeprägt ist, an der das zum Wiedergeben des Objekts verwendete Licht entsprechend der im Hologramm gespeicherten Phaseninformation gestreut wird, so dass das rekonstruierte Bild des Objekts durch Interferenzeffekte entsteht.

In der WO 00/17864 ist ein Datenspeicher mit einem optischen Informationsträger beschrieben, der eine als Speicherschicht eingerichtete Polymerfolie enthält. Die Polymerfolie besteht z.B. aus biaxial orientiertem Polypropylen. Bei dem vorbekannten Datenspeicher ist die Polymerfolie in mehreren Lagen spiralartig auf einen Wickelkern aufgewickelt, wobei sich zwischen benachbarten Lagen jeweils eine Adhäsionsschicht befindet. In den Datenspeicher lassen sich Informationen einschreiben, indem die Polymerfolie mit Hilfe eines Schreibstrahls eines Datenlaufwerks lokal erwärmt wird, wodurch sich die Brechzahl der Polymerfolie und das Reflexionsvermögen an der Grenzfläche der Polymerfolie lokal ändern. Dieser Effekt kann durch einen den Adhäsionsschichten beigegebenen Absorberfarbstoff verstärkt werden, der den Schreibstrahl zumindest teilweise absorbiert und die dabei erzeugte Wärme lokal an die Polymerfolie abgibt. Mit Hilfe eines Lesestrahls in dem Datenlaufwerk können die Veränderungen der Polymerfolie erfasst werden, da der Lesestrahl je nach eingeschriebener Information lokal mehr oder weniger stark an der Grenzfläche der Polymerfolie reflektiert wird. Durch Fokussieren des Schreibstrahls oder Lesestrahls lässt sich Information gezielt in eine vorgewählte Läge des Informationsträgers einschreiben bzw. daraus auslesen.

In Dokument DE 37 23 522 ist eine Vorrichtung zur reversiblen optischen Informationsspeicherung und ihre Anwendung beschrieben. Die Vorrichtung enthält einen Film aus einem polymeren Mischsystem, und vorteilhafterweise befinden sich im Speichermedium Farbstoffe. Die Datenspeicherung kann mittels holographischer Methoden erfolgen.

Es ist Aufgabe der Erfindung, einen holographischen Datenspeicher zu schaffen, der kostengünstig ist, breite Anwendungsmöglichkeiten hat und gegen äußere Einflüsse weitgehend unempfindlich ist.

Diese Aufgabe wird gelöst durch einen holographischen Datenspeicher mit den Merkmalen des Anspruchs 1 sowie die Verwendung eines Datenspeichers gemäß Anspruch 14. Ein Verfahren zum Eingeben von Information in einen.derartigen Datenspeicher ist in Anspruch 19 angegeben, ein Verfahren zum Auslesen von Information aus einem derartigen Datenspeicher in Anspruch 25.

Vorteilhafte Ausgestaltungen der Erfindung sind in den abhängigen Ansprüchen angeführt.

Der erfindungsgemäße holographische Datenspeicher weist eine als Speicherschicht eingerichtete Polymerfolie auf, die lokal durch Erwärmung veränderbar ist. Diese Polymerfolie ist als Decklage des Datenspeichers eingerichtet. Unterhalb der Polymerfolie ist eine Absorberschicht angeordnet, die einen Absorberfarbstoff aufweist, der dazu eingerichtet ist, einen zum Eingeben von Information dienenden Schreibstrahl zumindest teilweise zu absorbieren und die dabei erzeugte Wärme zumindest teilweise lokal an die Polymerfolie abzugeben. Vorzugsweise ist die als Speicherschicht eingerichtete Polymerfolie in dem Datenspeicher einlagig angeordnet (vorzugsweise in einer im wesentlichen ebenen Anordnung), also zum Beispiel nicht mehrlagig in Spiralform aufgewickelt.

Weil die Polymerfolie als Decklage des Datenspeichers eingerichtet ist, kann sie als exponierte Außenseite des Datenspeichers dienen und schützt die darunter befindliche, in der Regel relativ empfindliche Absorberschicht. Ferner sind die durch Erwärmung bewirkten Veränderungen an der Polymerfolie, mit deren Hilfe holographische Information gespeichert wird, vor allem in der Nähe der Absorberschicht lokalisiert, wie weiter unten näher erläutert. Daher liegt dieser mit der gespeicherten Information versehene Bereich der Polymerfolie ebenfalls in einer geschützten Zone. Unerwünschte Einflüsse auf die exponierte Außenseite, wie z.B. Kratzer, wirken sich daher in der Regel nicht weiter aus und führen vor allem nicht zu einem Datenverlust oder zu Störungen beim Eingeben von Information in den Datenspeicher.

Der erfindungsgemäße holographische Datenspeicher ist einfach aufgebaut, da eine zusätzliche Schutzeinrichtung in der Regel entbehrlich ist, und kann daher kostengünstig hergestellt werden.

Vorzugsweise ist unterhalb der Absorberschicht eine Klebstoffschicht angeordnet, die es ermöglicht, den holographischen Datenspeicher auf einen Gegenstand aufzukleben. Wenn sich die Klebstoffschicht unmittelbar unterhalb der Absorberschicht befindet, schützt sie gleichzeitig die Absorberschicht und den daran angrenzenden Bereich der Polymerfolie mit gespeicherter holographischer Information. Die Klebstoffschicht kann z.B. eine Klebemasse aus einer wässrigen Acrylat-Emulsion enthalten oder aus funktionalisiertem Poly(meth)acrylat bestehen. Für die Klebstoffschicht können auch andere Materialien verwendet werden. Eine bevorzugte Dicke der Klebstoffschicht beträgt etwa 20 µm, aber auch andere Dicken sind möglich.

Bei einer vorteilhaften Ausgestaltung der Erfindung ist zwischen der Speicherschicht und der Absorberschicht eine teildurchlässige Reflexionsschicht angeordnet. Die Reflexionsschicht kann Aluminium aufweisen und hat vorzugsweise eine Dicke im Bereich von 1 nm bis 50 nm, wobei auch andere Dicken möglich sind. Sie ist teildurchlässig, damit der Schreibstrahl beim Eingeben von Information bis zu der Absorberschicht durchdringt. Da die Reflexionsschicht dünn ist, behindert sie die Wärmeabgabe an die Polymerfolie praktisch nicht. Die Reflexionsschicht erleichtert es, die gespeicherte holographische Information in Reflexion auszulesen, was in den meisten Anwendungsfällen eine günstige Geometrie darstellt. Dies ist weiter unten anhand von Beispielen erläutert. Ferner vereinfacht die Reflexionsschicht die Fokuseinstellung des Schreibstrahls (siehe unten).

Es ist auch möglich, unterhalb der Absorberschicht eine Reflexionsschicht anzuordnen. Wenn eine Klebstoffschicht vorhanden ist, liegt diese Reflexionsschicht vorzugsweise zwischen der Absorberschicht und der Klebstoffschicht. Ein derartiger Schichtenaufbau erlaubt es, die Absorberschicht beim Auslesen von Information aus dem holographischen Datenspeicher in Transmission zu durchdringen, so dass z.B. der Kontrast des Auslesesignals verstärkt wird, wenn das Absorptionsvermögen des Absorberfarbstoffs innerhalb der Absorberschicht gemäß der eingegebenen Information variiert (Amplitudeneffekt; siehe unten).

Geeignete Materialien für die Polymerfolie sind z.B. Polypropylen, Polyvinylchlorid, Polyester, Polyethylenterephthalat (PET), Polyethylennaphthalat, Polymethylpenten (PMP; auch Poly-2-methylpenten) sowie Polyimid. Die Polymerfolie hat vorzugsweise eine derartige Stärke, dass sie selbsttragend ist und die oben erläuterte Schutzfunktion ausüben kann. Geeignete Stärken oder Dicken liegen im Bereich zwischen 10 µm und 100 µm, aber andere Dicken sind ebenfalls möglich.

Die Polymerfolie kann verstreckt sein und ist vorzugsweise biaxial verstreckt, z.B. indem sie bei der Herstellung innerhalb ihrer Ebene in zwei senkrecht aufeinanderstehenden Richtungen vorgespannt wird. Dies erhöht in der Regel die Festigkeit der Polymerfolie. Ferner ist bei einer verstreckten Polymerfolie im Folienmaterial eine hohe Energiedichte gespeichert. Durch lokale Erwärmung unter Deposition einer verhältnismäßig geringen Energiemenge pro Flächeneinheit, z.B. mit Hilfe eines Schreibstrahls einer Schreibeinrichtung, der in der Absorberschicht absorbiert wird, kann eine relativ starke Materialänderung mit einer Veränderung der lokalen Eigenschaften der Polymerfolie erzielt werden.

Die Absorberschicht weist vorzugsweise außer dem Absorberfarbstoff ein Bindemittel auf. Der Absorberfarbstoff ermöglicht eine zur Änderung der lokalen Eigenschaften der Polymerfolie ausreichende lokale Erwärmung der Polymerfolie bei relativ geringer Intensität des Schreibstrahls. Die Absorberschicht kann dünn sein und z.B. eine Dicke im Bereich von 0,1 µm bis 5 µm haben; andere Dicken sind ebenfalls möglich. Bevorzugte Bindemittel, die als Matrix für die Moleküle des Absorberfarbstoffs dienen, sind z.B. optisch transparente Polymere, z.B. aus Polymethylmethacrylat (PMMA) oder, bei Anwendungen für höhere Temperaturen, aus Polymethylpenten, Polyetheretherketon (PEEK) oder Polyetherimid.

Das Absorptionsmaximum des Absorberfarbstoffs sollte mit der Lichtwellenlänge des verwendeten Schreibstrahls zusammenfallen, um eine effiziente Absorption zu erzielen. Für eine Lichtwellenlänge von 532 nm eines von einem Laser erzeugten Schreibstrahls sind z.B. Farbstoffe aus der Sudanrot-Familie (Diazofarbstoffe) oder (für besonders polare Kunststoffe) Eosinscharlach geeignet. Für die gebräuchlichen Laserdioden mit einer Lichtwellenlänge von 650 bis 660 nm oder 685 nm sind grüne Farbstoffe, z.B. aus der Styryl-Familie (die als Laserfarbstoffe gebräuchlich sind), besser geeignet.

Es gibt verschiedene Möglichkeiten, um die durch eine lokale Erwärmung der Polymerfolie bewirkte lokale Änderung ihrer Eigenschaften zum Speichern von Information zu nutzen.

Bei einer Möglichkeit ist die Brechzahl der Polymerfolie lokal durch Erwärmung veränderbar, wobei optische Phaseninformation über die lokale optische Weglänge in der Polymerfolie abspeicherbar ist. Dabei ist es vorgesehen, die Polymerfolie beim Auslesen von Information in Transmission zu durchstrahlen (wobei die Reflexionsschicht von Hilfe sein kann, siehe unten). In der Polymerfolie lässt sich also lokal, d.h. in einem zum Speichern einer Informationseinheit vorgesehenen Bereich, Phaseninformation ablegen, indem in diesem Bereich die Brechzahl durch Erwärmung (z.B. mit Hilfe eines Schreibstrahls einer Schreibeinrichtung) verändert wird. Die lokale Änderung der Brechzahl bewirkt eine Änderung der optischen Weglänge der beim Auslesen von Information aus der Polymerfolie verwendeten Strahlung (die die Polymerfolie in Transmission durchstrahlt). Die optische Weglänge ist nämlich das Produkt aus der geometrischen Weglänge und der Brechzahl. Über eine Änderung der Brechzahl lässt sich also die lokale Phasenlage der beim Auslesen von Information eingesetzten Strahlung beeinflussen, d.h. die gewünschte holographische Information als Phaseninformation abspeichern. Ein auf diese Weise in der Polymerfolie erzeugtes Hologramm ist demnach refraktives Phasenhologramm.

Bei einer anderen Möglichkeit ist die Oberflächenstruktur bzw. Grenzflächenstruktur der Polymerfolie lokal durch Erwärmung veränderbar, wobei holographische Information über die lokale Grenzflächenstruktur der Polymerfolie abspeicherbar ist. In diesem Fall lässt sich also die Grenzflächenstruktur oder Topographie der Polymerfolie, insbesondere an der von der exponierten Außenseite der Polymerfolie weg weisenden Grenzfläche zu der Absorberschicht oder der Reflexionsschicht, lokal verändern, indem z.B. ein als Schreibstrahl dienender Laserstrahl auf die Absorberschicht oder die Grenzflächenzone der Polymerfolie fokussiert wird, so dass die Lichtenergie dort absorbiert und in Wärmeenergie umgewandelt wird. Insbesondere, wenn der Laserstrahl kurzzeitig (gepulst) eingestrahlt wird, bleibt die zu der lokalen Änderung der Grenzflächenstruktur führende Materialveränderung in der Polymerfolie aufgrund der allgemein schlechten Wärmeleitfähigkeit des Polymers (bzw. einer sehr dünnen Reflexionsschicht) auf ein sehr enges Volumen begrenzt. Wenn die holographische Information Punkt für Punkt in die Polymerfolie eingegeben wird, wobei der einem Punkt zugeordnete Bereich typischerweise lineare seitliche Abmessungen in der Größenordnung von 0,5 µm bis 1 µm hat, ändert sich das Höhenprofil der Polymerfolie typischerweise um 50 nm bis 500 nm, was im Einzelnen von den Eigenschaften und Betriebsbedingungen des Schreibstrahls sowie den Eigenschaften der Polymerfolie, der Absorberschicht und gegebenenfalls der Reflexionsschicht abhängt. Das Punktraster, d.h. der Mittenabstand zwischen zwei Punkten ("Pits"), liegt typischerweise im Bereich von 1 µm bis 2 µm. Generell gilt, dass kürzere Lichtwellenlängen des Schreibstrahls ein engeres Punktraster zulassen.

Es sind auch Mischformen denkbar, bei denen die holographische Information sowohl durch lokale Änderung der Brechzahl als auch durch lokale Veränderung der Grenzflächenstruktur der Polymerfolie abspeicherbar ist.

Der Absorberfarbstoff kann dazu eingerichtet sein, bei Absorption eines zum Eingeben von Information dienenden Schreibstrahls in seinen optischen Eigenschaften lokal verändert zu werden. Dabei ist es besonders vorteilhaft, wenn der Absorberfarbstoff lokal sein Absorptionsvermögen ändert, z.B. indem er von dem Schreibstrahl teilweise oder vollständig ausgebleicht wird. Durch lokale Variation des Absorptionsvermögens in der Absorberschicht lässt sich der durch die Veränderungen in der Polymerfolie erzielte Effekt verstärken, so dass das beim Auslesen des holographischen Datenspeichers erhaltene Signal stärker oder kontrastreicher ist, als wenn die Absorberschicht nicht bei der Datenspeicherung mitwirkt. Die Gewichtung der einzelnen Effekte (lokale Brechzahl der Polymerfolie, lokale Grenzflächenstruktur der Polymerfolie, Amplitudeneffekt durch lokal ausgebleichten Absorberfarbstoff) im Auslesesignal lässt sich durch die Wahl des Schichtenaufbaus des holographischen Datenspeichers beeinflussen oder einstellen. So ist ein Amplitudeneffekt relativ groß, wenn eine lokal ausgebleichte Absorberschicht beim Auslesen von Information durchstrahlt wird, wie es der Fall ist, wenn unterhalb der Absorberschicht eine Reflexionsschicht angeordnet ist.

Die zu speichernde Information kann in den holographischen Datenspeicher eingegeben werden, indem in einem Hologramm eines Speicherobjekts enthaltene holographische Information als zweidimensionale Anordnung berechnet wird und ein Schreibstrahl einer Schreibeinrichtung, vorzugsweise eines Laserlithographen, auf die Polymerfolie und/oder die Absorberschicht des Datenspeichers gerichtet und entsprechend der zweidimensionalen Anordnung so angesteuert wird, dass die lokalen Eigenschaften der Polymerfolie gemäß der holographischen Information eingestellt werden. Da die physikalischen Vorgänge bei der Streuung von Licht an einem Speicherobjekt bekannt sind, kann z.B. ein herkömmlicher Aufbau zum Erzeugen eines Hologramms (bei dem kohärentes Licht von einem Laser, das von einem Objekt (Speicherobjekt) gestreut wird, mit einem kohärenten Referenzstrahl zur Interferenz gebracht wird und das dabei entstehende Interferenzmuster als Hologramm aufgenommen wird) mit Hilfe eines Computerprogramms simuliert und das Interferenzmuster bzw. die Modulation der lokalen Eigenschaften der Polymerfolie als zweidimensionale Anordnung (zweidimensionaler Array) berechnet werden.

Wie weiter oben bereits erläutert, sind Beispiele für die lokalen Eigenschaften der Polymerfolie, die gemäß der holographischen Information eingestellt werden, die lokale Brechzahl sowie die lokale Grenzflächenstruktur der Polymerfolie.

Die Auflösung eines geeigneten Laserlithographen beträgt typischerweise etwa 50 000 dpi (dots per inch). Damit kann die Polymerfolie lokal in Bereichen oder Pits einer Größe von etwa 0,5 µm bis 1 µm verändert werden. Die Schreibgeschwindigkeit und andere Details hängen unter anderem von den Parametern des Schreiblasers (Laserleistung, Lichtwellenlänge) und der Pulsdauer sowie von den Eigenschaften der Polymerfolie und der Absorberschicht ab.

Vorzugsweise wird der Schreibstrahl von der Seite der Decklage her auf den holographischen Datenspeicher gerichtet. In diesem Fall ist es z.B. möglich; Information in den Datenspeicher einzugeben, wenn die Klebstoffschicht keine guten optischen Eigenschaften hat oder der Datenspeicher auf eine nichttransparente Unterlage geklebt ist.

Wenn der holographische Datenspeicher eine teildurchlässige Reflexionsschicht hat, wie weiter oben erläutert, kann zum Fokussieren des Schreibstrahls dessen von der Reflexionsschicht zurückgeworfener Reflex ausgewertet werden. Ein vergleichbarer Reflex würde auch bei Reflexion an der Grenzfläche zwischen zwei Medien mit verschiedener Brechzahl auftreten, wenn dort keine Reflexionsschicht angeordnet ist, wird im vorliegenden Fall aber durch die Reflexionsschicht deutlich verstärkt. Die Auswertung kann beispielsweise über die mit Hilfe eines Detektors gemessene Größe des Reflexes erfolgen, wobei die genaue Fokuseinstellung z.B. mit Hilfe von Kalibrationsmessungen ermittelt werden kann. Wenn die Reflexionsschicht sehr dünn ist (etwa 1 nm bis 50 nm, aber auch mehr oder weniger), kann man davon ausgehen, dass der auf die Reflexionsschicht eingestellte Fokus des Schreibstrahls praktisch mit dem optimalen Fokus in der Absorberschicht übereinstimmt. Daher kann beim Eingeben von Information die Absorberschicht praktisch in optimaler Weise erwärmt werden.

Wie erwähnt, wird die holographische Information vorzugsweise in Form von Pits vorgegebener Größe eingegeben. Der Begriff "Pit" ist hier allgemeiner im Sinne eines veränderten Bereichs zu verstehen und nicht eingeschränkt auf seine ursprüngliche Bedeutung (Loch oder Vertiefung). Dabei kann in einem Pit die holographische Information in binär kodierter Form gespeichert werden. Das heißt, im Bereich eines gegebenen Pits nehmen die lokalen Eigenschaften der Polymerfolie nur eine von zwei möglichen Grundformen (Grundwerten) an. Diese Grundformen unterscheiden sich vorzugsweise deutlich, damit in der Praxis vorkommende Zwischenformen, die nahe bei der einen oder der anderen Grundform liegen, eindeutig der einen oder der anderen Grundform zugeordnet werden können, um die Information zuverlässig und eindeutig zu speichern.

Alternativ kann in einem Pit die holographische Information in kontinuierlich kodierter Form gespeichert werden, wobei die lokalen Eigenschaften der Polymerfolie in dem Pit gemäß einem Wert aus einem vorgegebenen Wertebereich eingestellt werden. Wenn z.B. die lokale Grenzflächenstruktur der Polymerfolie eingestellt werden soll, wird also die lokale maximale Höhenänderung der Grenzflächenstruktur in dem Pit aus einem vorgegebenen Wertebereich ausgewählt. Dies bedeutet, dass in einem gegebenen Pit die Grenzflächenstruktur der Polymerfolie Zwischenformen zwischen zwei Grundformen annehmen kann, so dass die maximale Höhenänderung der vorliegenden Zwischenform einen Wert aus einem vorgegebenen Wertebereich annimmt, dessen Grenzen durch die maximalen Höhenänderungen der beiden Grundformen gegeben sind.

In diesem Fall lässt sich die Information also "in Graustufen" abspeichern, so dass jedem Pit der Informationsgehalt von mehr als einem Bit zukommt. Entsprechendes gilt für die Einstellung der lokalen Brechzahl der Polymerfolie.

Zum Auslesen von Information aus dem erfindungsgemäßen holographischen Datenspeicher kann Licht, vorzugsweise kohärentes Licht (z.B. von einem Laser), großflächig auf die Speicherschicht des Datenspeichers gerichtet werden. Dabei wird das Licht von den lokal variierenden Eigenschaften der Polymerfolie (z.B, der Brechzahl oder der Grenzflächenstruktur) moduliert. Als Rekonstruktion der in dem bestrahlten Bereich enthaltenen Information wird ein holographisches Bild, in einem Abstand zu dem Datenspeicher erfasst, z.B. mit, einem CCD-Sensor, der mit einer Datenverarbeitungseinrichtung verbunden ist.

Grundsätzlich kann der Auslesevorgang unter Transmission des holographischen Datenspeichers erfolgen, d.h. der Datenspeicher wird vollständig durchstrahlt und das holographische Bild wird hinter dem Datenspeicher erfasst. Dafür müssen jedoch sämtliche Schichten des Datenspeichers eine gute optische Qualität haben, also nicht nur die Polymerfolie, sondern auch die Absorberschicht und eine optionale Klebstoffschicht. Vorteilhafter ist es daher, die Information in Reflexion auszulesen, wobei das zum Auslesen verwendete Licht nach Durchdringen der Polymerfolie reflektiert wird. In diesem Fall entsteht das holographische Bild aus Licht, das zweimal durch die Polymerfolie hindurchgetreten ist und dabei z.B. durch lokale Variationen der Brechzahl und/oder der Grenzflächenstruktur der Polymerfolie moduliert wurde. Grundsätzlich kann auch dann in Reflexion ausgelesen werden, wenn keine gesonderte Reflexionsschicht vorhanden ist; Voraussetzung ist lediglich das Vorhandensein einer Grenzfläche zwischen zwei Medien mit unterschiedlichen Brechzahlen. Die erläuterte Reflexionsschicht zwischen der Polymerfolie und der Absorberschicht verbessert jedoch die Wiedergabe des holographischen Bildes erheblich.

Unter dem Begriff "großflächig" ist eine Fläche zu verstehen, die deutlich größer ist als die Fläche eines Pits. In diesem Sinne ist z.B. eine Fläche von 1 mm² großflächig. Für das Schema, nach dem Information abgelegt und ausgelesen wird, gibt es viele verschiedene Möglichkeiten. Es ist denkbar, ein Hologramm aus der Polymerfolie auf einmal auszulesen, indem die gesamte Fläche des als Hologramm eingerichteten Bereichs des holographischen Datenspeichers auf einmal bestrahlt wird. Insbesondere bei größeren Flächen ist es jedoch vorteilhaft, die zu speichernde Information auf eine Anzahl oder Vielzahl von Einzelbereichen aufzuteilen (z.B. mit einer jeweiligen Fläche von 1 mm²) und die Information lediglich aus einem vorgegebenen Einzelbereich auf einmal auszulesen.

Beim Auslesen von Information kommt es durch die lokal variierenden Eigenschaften der Polymerfolie zu Laufzeitunterschieden der von verschiedenen Punkten ausgehenden Lichtwellen, also im Wesentlichen zu einer periodischen Phasenmodulation (was insbesondere bei einer lokalen Einstellung der Brechzahl oder der Grenzflächenstruktur der Polymerfolie gilt). Der von dem Licht erfasste Bereich der Polymerfolie wirkt so wie ein Beugungsgitter, das einfallendes Licht in einer definierten Art und Weise ablenkt. Das abgelenkte Licht formt ein Bild des Speicherobjekts, das die Rekonstruktion von gespeicherter holographischer Information darstellt.

Grundsätzlich lässt sich mit dem holographischen Datenspeicher holographische Information von unterschiedlichen Arten von Speicherobjekten nutzen. So kann z.B. die in Bildern, wie z.B. Fotografien, Logos, Schriften, usw., enthaltene Information gespeichert und ausgelesen werden. Besonders vorteilhaft ist jedoch das Speichern maschinenlesbarer Daten. Dies erfolgt beispielsweise in Form sogenannter Datenseiten, wobei die in einem Hologramm eines graphischen Bitmusters (das die Dateninformation darstellt) enthaltene holographische Information wie erläutert in die als Speicherschicht dienende Polymerfolie eingegeben wird. Beim Auslesen entsteht ein holographisches Bild dieses graphischen Musters. Die darin enthaltene Information kann z.B. mit Hilfe eines genau justierten CCD-Sensors erfasst und über zugehörige Auswertesoftware verarbeitet werden. Für die Wiedergabe von Bildern, bei denen es nicht auf eine hohe Genauigkeit ankommt, reicht im Prinzip bereits eine einfache Mattscheibe oder z.B. eine Kamera mit einem LCD-Bildschirm. Bei der holographischen Speicherung maschinenlesbarer Daten ist es vorteilhaft, dass die Information nicht sequentiell ausgelesen werden muss, sondern dass ein ganzer Datensatz auf einmal erfasst werden kann, wie erläutert. Sollte trotz des Schutzes der zur Informationsspeicherung dienenden Bereiche des Datenspeichers durch die exponierte Außenseite der Polymerfolie dennoch eine Beschädigung auftreten, so führt dies im Gegensatz zu einem herkömmlichen Datenspeicher in der Regel nicht zu einem Datenverlust, sondern lediglich zu einer Verschlechterung der Auflösung des beim Auslesen der Informationen rekonstruierten holographischen Bildes. Dies ist in der Regel unproblematisch.

Im Folgenden wird die Erfindung anhand von Ausführungsbeispielen weiter erläutert. Die Zeichnungen zeigen in
- Figur 1: einen schematischen Längsschnitt durch eine erste Ausführungsform des erfindungsgemäßen holographischen Datenspeichers,
- Figur 2: einen schematischen Längsschnitt durch eine zweite Ausführungsform des erfindungsgemäßen holographischen Datenspeichers,
- Figur 3: eine schematische Draufsicht auf einen Ausschnitt aus einem erfindungsgemäßen holographischen Datenspeicher gemäß der zweiten Ausführungsform, in dem Information über Veränderungen der Brechzahl abspeicherbar ist,
- Figur 4: einen schematischen Längsschnitt durch den holographischen Datenspeicher aus Figur 3, wobei das Eingeben von Information veranschaulicht ist,
- Figur 5: einen schematischen Längsschnitt durch den holographischen Datenspeicher aus Figur 3, wobei das Auslesen von Information veranschaulicht ist,
- Figur 6: einen schematischen Längsschnitt durch einen holographischen Datenspeicher gemäß der zweiten Ausführungs-form, bei dem Information über die lokale Grenzflächen-struktur abspeicherbar ist, wobei das Auslesen von Information veranschaulicht ist, und
- Figur 7: einen schematischen Längsschnitt durch eine dritte Ausführungsform des erfindungsgemäßen holographischen Datenspeichers.

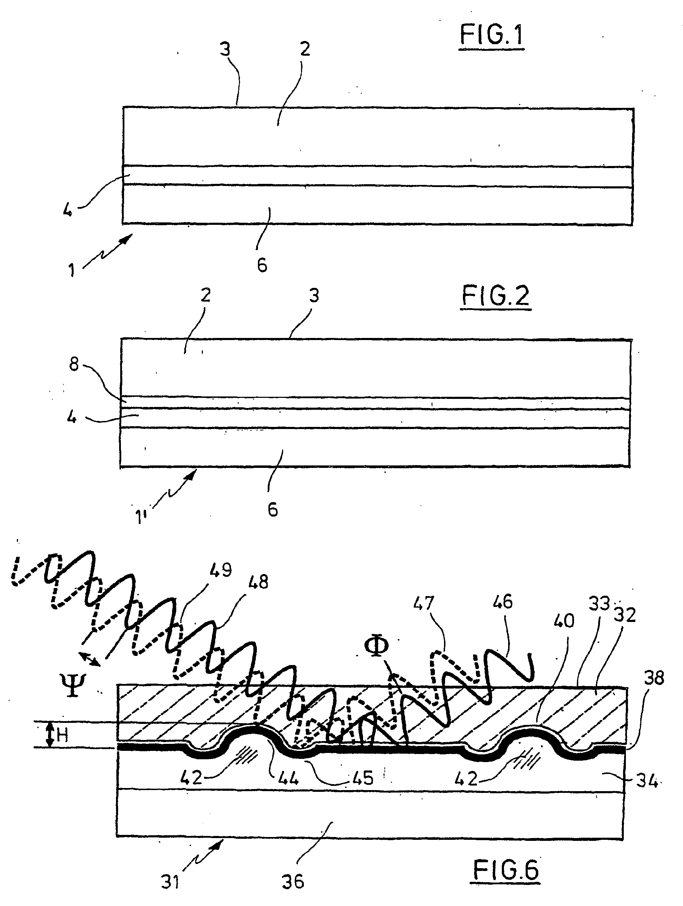

In Figur 1 ist in schematischer Weise und nicht maßstäblich ein Ausschnitt aus einem holographischen Datenspeicher 1 gemäß einer ersten Ausführungsform im Längsschnitt dargestellt. Der Datenspeicher 1 enthält eine Polymerfolie 2, die gleichzeitig als Speicherschicht und als Decklage mit einer exponierten Außenseite 3 dient. Im Ausführungsbeispiel ist die Polymerfolie 2 selbsttragend. Unterhalb der Polymerfolie 2 und an die Polymerfolie 2 angrenzend ist eine Absorberschicht 4 mit einem Absorberfarbstoff angeordnet. Darunter befindet sich eine Klebstoffschicht 6, die vorzugsweise im Lieferzustand des Datenspeichers 1 durch eine abziehbare Folie oder ein Silikonpapier abgedeckt ist. Die Begriffe "oben" und "unten" beziehen sich hier und im Folgenden auf die Darstellung in den Figuren; der Datenspeicher kann jedoch auch in jeder anderen Orientierung angeordnet werden.

Im Ausführungsbeispiel handelt es sich bei der Polymerfolie 2 um eine biaxial verstreckte Folie aus Polypropylen (biaxial orientiertes Polypropylen, BOPP) mit einer Stärke von 35 µm. Dünnere oder dickere Folien sind ebenfalls denkbar. Auch kommen Folien aus anderen Materialien in Betracht, wie weiter oben erläutert.

Die Absorberschicht 4 enthält im Ausführungsbeispiel Polymethylmethacrylat (PMMA) als Bindemittel, dem der Absorberfarbstoff Sudanrot 7B zugesetzt ist. Im Ausführungsbeispiel ist die Absorberschicht aus einer Lösung von 10,5 Mass.% Polymethylmethacrylat und 1, 2 Mass. % Sudanrot 7B in Toluol hergestellt, die mit einer Linienrasterwalze auf die Unterseite der Polymerfolie 2 aufgetragen wird. Die Dicke der Absorberschicht beträgt etwa 0,5 *µ*m und liegt vorzugsweise im Bereich von 0, 3 *µ*m bis 1,0 *µ*m. Andere Schichtdicken sind jedoch ebenfalls denkbar. Damit die Absorberschicht 4 besser haftet, kann die Unterseite der Polymerfolie 2 vor dem Auftragen der Absorberschicht 4 nach einem grundsätzlich bekannten Verfahren vorbehandelt werden.

Die Klebstoffschicht 6 ist im Ausführungsbeispiel aus einer wässrigen Acrylat-Dispersion hergestellt und hat eine Schichtdicke von 23 ± 4 *µ*m. Andere Schichtdicken sind ebenfalls möglich, und es lassen sich auch andere Klebemassen einsetzen. Die Unterseite der Absorberschicht 4 kann vor dem Auftragen der Klebstoffschicht 6 vorbehandelt werden, um ein besseres Anhaften der Klebstoffschicht 6 zu gewährleisten.

Die Absorberschicht 4 und die beim Eingeben von Information (siehe unten) veränderten Zonen der Polymerfolie 2 liegen im inneren Bereich des Datenspeichers 1 und sind durch den oberen Bereich der Polymerfolie 2 mit der Außenseite 3 sowie die Klebstoffschicht 6 geschützt.

Figur 2 ist eine Darstellung ähnlich wie Figur 1 für eine zweite Ausführungsform eines holographischen Datenspeichers, der hier mit 1' bezeichnet ist. Ebenso wie der Datenspeicher 1 weist der Datenspeicher 1' eine Polymerfolie 2 (hier aus Polyethylenterephthalat), die als Speicherschicht und Decklage eingerichtet ist, mit einer exponierten Außenseite 3, eine Absorberschicht 4 und eine Klebstoffschicht 6 auf. Zusätzlich befindet sich zwischen der Polymerfolie 2 und der Absorberschicht 4 eine Reflexionsschicht 8.

Im Ausführungsbeispiel besteht die Reflexionsschicht 8 aus auf die Unterseite der Polymerfolie 2 aufgedampftem Aluminium mit einer derartigen Dicke, dass eine Transmission von 50% resultiert. Bevorzugte Schichtdicken liegen im Bereich von 1 nm bis 50 nm, aber auch kleinere öder größere Werte sind möglich. Bei einer solch geringen Dicke ist die Reflexionsschicht 8 teildurchlässig, so dass ein auf die Außenseite 3 der Polymerfolie 2 gerichteter Schreibstrahl (z.B. eines Laserlithographen, siehe unten) die Reflexionsschicht 8 durchdringen kann, um die Absorberschicht 4 zu erreichen.

Wie bereits erwähnt, sind für die einzelnen Schichten des holographischen Datenspeichers eine Reihe von Materialien möglich, und auch die Schichtdicken können eine Vielzahl von Werten annehmen. Ferner sind zusätzliche Schichten denkbar. Während die Polymerfolie 2 bei den Datenspeichern 1 und 1' selbsttragend ist, kann bei einer anderen Ausführungsform eine zusätzliche starre Trägerlage vorgesehen sein, z.B. zwischen der Absorberschicht und der Klebstoffschicht.

In dem anhand von Figur 1 erläuterten Ausführungsbeispiel weist die Absorberschicht 4 den Absorberfarbstoff Sudanrot 7B auf, dessen Moleküle in eine Matrix aus einem optisch transparenten Polymer, und zwar Polymethylmethacrylat (PMMA), eingebettet sind, wobei die Absorberschicht 4 eine Dicke von etwa 0,5 *µ*m hat. Sudanrot 7B absorbiert besonders gut Licht im Wellenlängenbereich um 532 nm; diese Wellenlänge ist für einen Schreibstrahl eines Laserlithographen zum Eingeben von Information in den Datenspeicher geeignet. Beispiele für andere Absorberfarbstoffe sind weiter oben angegeben. So eignen sich grüne Farbstoffe, z.B. aus der Styryl-Familie, besonders für Lichtwellenlängen von 635 nm oder 650 bis 660 nm oder 685 nm, bei denen die Laserdioden derzeitiger DVD-Geräte arbeiten; derartige Laserdioden können direkt moduliert werden, was die Pulserzeugung wesentlich vereinfacht und verbilligt. in Zukunft könnte auch der Bereich von 380 bis 420 nm interessant sein, wenn entsprechende blaue Laserdioden kommerziell und preisgünstig zu haben sind. Hierfür sind dann vorzugsweise gelbe Absorberfarbstoffe einzusetzen, wie z.B. mit schwachen Donoren und Akzeptoren substituierte Stilbene, donorsubstituierte Nitrobenzole oder Coumarinfarbstoffe.

Die Absorberschicht 4 hat eine bevorzugte optische Dichte im Bereich von 0,2 bis 1,0; andere Werte sind jedoch ebenfalls denkbar. Die optische Dichte ist ein Maß für die Absorption, hier bezogen auf die Lichtwellenlänge eines Schreibstrahls. Definiert ist die optische Dichte als negativer dekadischer Logarithmus der Transmission durch die Absorberschicht, was mit dem Produkt des Extinktionskoeffizienten bei der verwendeten Wellenlänge des Schreibstrahls, der Konzentration des Absorberfarbstoffs in der Absorberschicht 4 und der Dicke der Absorberschicht 4 übereinstimmt.

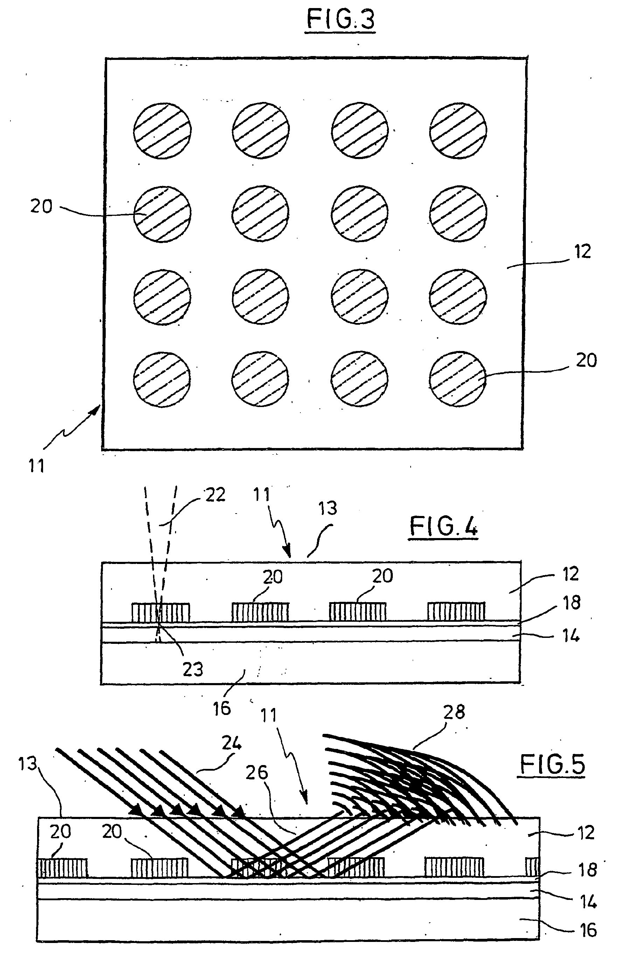

Im Folgenden wird anhand der Figuren 3 bis 5 erläutert, wie in einen holographischen Datenspeicher gemäß der anhand von Figur 2 beschriebenen Ausführungsform Information eingegeben und daraus ausgelesen werden kann. Der holographische Datenspeicher ist mit 11 bezeichnet und weist eine Polymerfolie 12 mit einer exponierten Außenseite 13, eine Absorberschicht 14, eine Klebstoffschicht 16 und eine teildurchlässige Reflexionsschicht 18 auf, siehe Figur 4. Ähnlich wie die Figuren 1 und 2 sind die Figuren 3 bis 5 nicht maßstäblich. Die Polymerfolie 12 besteht hier aus biaxial orientiertem Polyethylenterephthalat (PET) und hat eine Dicke von 50 *µ*m. Die Brechzahl von biaxial orientiertem Polyethylenterephthalat lässt sich lokal durch Erwärmung verändern, was zum Speichern von Information genutzt wird.

Innerhalb der Polymerfolie 12 ist Information in Form von Pits 20 abgelegt. In dem Bereich eines Pits 20 hat die Polymerfolie 12 eine andere Brechzahl als in den Zonen zwischen den Pits 20. Der Begriff "Pit" ist hier im Sinne eines geänderten Bereichs zu verstehen, also allgemeiner als in seiner ursprünglichen Bedeutung ("Loch"). Dabei kann in einem Pit die Information in binär kodierter Form gespeichert sein, indem die Brechzahl nur zwei verschiedene Werte annimmt (wobei einer der beiden Werte auch mit der Brechzahl der Polymerfolie 12 in den Zonen zwischen den Pits 20 übereinstimmen kann). Es ist auch möglich, in einem Pit 20 Information in kontinuierlich kodierter Form zu speichern, wobei die Brechzahl innerhalb des Pits 20 einen beliebig ausgewählten Wert aus einem vorgegebenen Wertebereich annehmen kann. Anschaulich gesprochen, ist bei Speicherung in binär kodierter Form ein Pit "schwarz" oder "weiß", während es bei Speicherung in kontinuierlich kodierter Form auch alle dazwischenliegenden Grauwerte annehmen kann.

Figur 3 ist eine schematische Draufsicht auf einen Ausschnitt aus dem Datenspeicher 11, die die Anordnung der Pits 20 zeigt, die von dem Schreibstrahl eines Laserlithographen erzeugt werden (wie weiter unten anhand von Figur 4 erläutert). Im Ausführungsbeispiel hat ein Pit 20 einen Durchmesser von etwa 0,8 *µ*m. Andere Formen als kreisrunde Pits 20 sind ebenfalls möglich, z.B. quadratische oder rechteckige Pits, aber auch andere Größen. Vorzugsweise beträgt die typische Abmessung eines Pits etwa 0,5 *µ*m bis 2,0 *µ*m. Die Figur 3 ist also eine stark vergrößerte Darstellung.

In Figur 4 ist in schematischer Weise angedeutet, wie mit Hilfe eines Schreibstrahls 22 einer Schreibeinrichtung (im Ausführungsbeispiel eines Laserlithographen) ein Pit 20 erzeugt wird. Zunächst wird der Schreibstrahl 22 so fokussiert, dass er seinen geringsten Querschnitt in etwa in der Absorberschicht 14 hat. Dabei ist die teildurchlässige Reflexionsschicht 18 eine große Hilfe, denn sie lenkt den Schreibstrahl 22 zurück in die Schreibeinrichtung, wo der Reflex ausgewertet wird. Die Fokussieroptik des Schreibstrahls 22 wird dabei solange verstellt, bis die Lage des Fokus optimiert ist. Im Ausführungsbeispiel befindet sich der Fokus 23 in der dünnen Reflexionsschicht 18, was am einfachsten zu erreichen ist. Während des Fokussiervorgangs kann der Schreibstrahl 22 mit geringer Leistung betrieben werden, um eine übermäßige Erwärmung in der Nähe des Fokus zu verhindern.

Die Darstellung des Schreibstrahls 22 und seines Fokus 23 in Figur 4 ist sehr schematisch. Wegen der Wellennatur des Lichtes ist der Fokus 23 nicht punktförmig, sondern hat eine mit dem Durchmesser eines Pits 20 vergleichbare Größe, so dass der Schreibstrahl 22 in der Lage ist, innerhalb des Datenspeichers 11 einen Bereich von der Größe eines Pits 20 relativ gleichmäßig zu erwärmen. Die größte Erwärmung tritt dabei innerhalb der Absorberschicht 14 auf, weil sie sich im Bereich des Fokus 23 befindet und der Absorberfarbstoff den Schreibstrahl 22 absorbiert. Die dabei freiwerdende Wärme überträgt sich durch die Reflexionsschicht 18 weitgehend auf die Polymerfolie 12 und bewirkt so eine lokale Änderung der Brechzahl in der Polymerfolie 12 im Bereich eines Pits 20. Da die Polymerfolie 12 im Wesentlichen in ihrem unteren Bereich erwärmt wird, erstreckt sich das Pit 20 nicht über die volle Dicke der Polymerfolie 12. In der Praxis ist die Übergangszone im oberen Bereich eines Pits 20 zum mittleren Bereich der Polymerfolie 12 kontinuierlich, d.h. die Brechzahl ändert sich in dieser Zone allmählich und nicht so scharf abgegrenzt, wie in Figur 4 angezeigt.

Der Abstand zwischen dem oberen Bereich eines Pits 20 und der Außenseite 13 der Polymerfolie 12 ist relativ groß, so dass die von dem Schreibstrahl 22 erzeugten Pits 20 in einem vor äußeren Einflüssen relativ sicheren Bereich der Polymerfolie 11 liegen.

Um in die Polymerfolie 11 Information einzugeben, wird zunächst in einem Hologramm eines Speicherobjekts enthaltene Phaseninformation als zweidimensionale Anordnung berechnet. Dies kann als Simulation eines klassischen Aufbaus zum Erzeugen eines fotografisch erfassten Hologramms durchgeführt werden, bei dem kohärentes Licht von einem Laser nach Streuung an dem Speicherobjekt mit einem kohärenten Referenzstrahl zur Interferenz gebracht und das dabei entstehende Interferenzmuster als Hologramm ausgenommen wird. Die zweidimensionale Anordnung (zweidimensionaler Array) enthält dann die Information, die zum Ansteuern des Schreibstrahls eines Laserlithographen erforderlich ist. Im Ausführungsbeispiel besitzt der Laserlithograph eine Auflösung von etwa 50 000 dpi (d.h. etwa 0,5 µm). Der Schreibstrahl des Laserlithographen wird im gepulsten Betrieb (typische Pulsdauer von etwa 10 ns bis 10 µs bei einer Strahlleistung von etwa 1 mW bis 20 mW zum Eingeben eines Pits 20) über die Außenseite 13 der Polymerfolie 12 geführt, um die gewünschte Information sequentiell in die Polymerfolie 12 (oder einen vorgewählten Bereich der Polymerfolie 12) einzugeben. Dabei erwärmt der Schreibstrahl 22 die Absorberschicht 14 entsprechend dem zweidimensionalen Array und erzeugt so die Pits 20, wie oben erläutert.

In Figur 5 ist in schematischer Weise veranschaulicht, wie die in der Polymerfolie 12 gespeicherte Information ausgelesen werden kann. Dazu wird kohärentes Licht von einem Laser auf die Oberseite 13 des Datenspeichers 11 gerichtet. Der Übersichtlichkeit halber ist von diesem vorzugsweise parallel einfallenden kohärenten Licht in Figur 5 nur eine kleiner Ausschnitt dargestellt, der mit 24 bezeichnet ist (einfallender Lesestrahl). In der Praxis ist das kohärente Licht großflächig auf die Polymerfolie 12 gerichtet und überdeckt einen Bereich von z.B, 1 mm². Denn zur Rekonstruktion der abgespeicherten Information muss das von vielen Pits 20 ausgehende Licht erfasst werden. Die Intensität des einfallenden Lesestrahls 24 ist zu schwach, um die Brechzahl in der Polymerfolie 12 und somit die abgespeicherte Information zu verändern.

Ein Teil des einfallenden Lesestrahls 24, der aus praktischen Gründen unter einem Winkel auf die Außenseite 13 der Polymerfolie 12 auftrifft, wird an der Reflexionsschicht 18 an der Unterseite der Polymerfolie 12 reflektiert, so dass ein reflektierter Lesestrahl 26 von der Reflexionsschicht 18 ausgeht und dabei die Pits 20 durchdringt. (Der von der Reflexionsschicht 18 durchgelassene Anteil des einfallenden Lesestrahls 24 ist in Figur 5 der Übersichtlichkeit halber nicht eingezeichnet.) Da die lokale Brechzahl der Polymerfolie 12 je nach Pit 20 unterschiedlich ist, wird die lokale optische Weglänge variiert, so dass es zu Phasenverschiebungen kommt. Dies hat zur Folge, dass von dem Datenspeicher 11 nach Art eines Beugungsmusters Kugelwellen 28 ausgehen, die die gespeicherte Phaseninformation enthalten. In einigem Abstand von dem Datenspeicher 11 kann mit einem Detektor ein holographisches Bild erfasst werden, das durch Interferenz der Kugelwellen 28 zustande kommt.

Der für den Detektor erforderliche Aufwand und die Weiterverarbeitung des erfassten holographischen Bilds hängen von der Art des Speicherobjekts ab, wie weiter oben bereits erläutert. Für die Wiedergabe von maschinenlesbaren Daten (Datenseiten) eignet sich besonders ein mit einer Datenverarbeitungseinrichtung verbundener CCD-Sensor, während für eine reine Bildwiedergabe auch ein einfacherer Detektor sinnvoll ist, insbesondere dann, wenn die Bilddaten nicht weiterverarbeitet werden sollen.

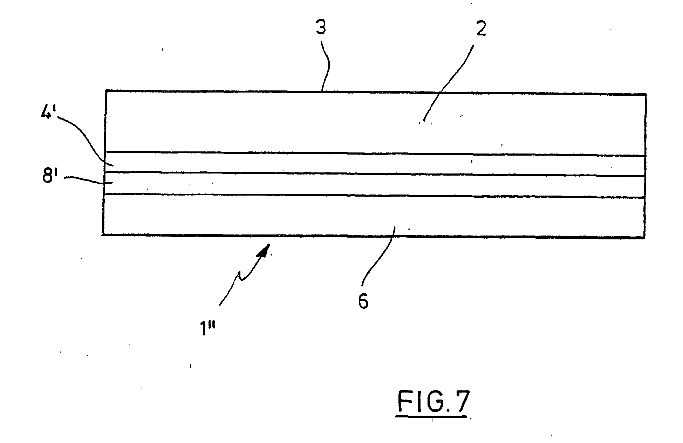

Anhand von Figur 6 wird eine weitere Möglichkeit für das Speichern von holographischer Information mittels eines holographischen Datenspeichers erläutert, der ähnlich aufgebaut ist wie der holographische Datenspeicher gemäß Figur 2. Der hier mit 31 bezeichnete holographische Datenspeicher weist wiederum eine Polymerfolie 32 mit einer Außenseite 33, eine Absorberschicht 34, eine Klebstoffschicht 36 sowie eine Reflexionsschicht 38 auf.

Um ein Pit zur Informationsspeicherung zu erzeugen, wird ein gepulster Schreibstrahl einer Schreibeinrichtung (vorzugsweise eines Laserlithographen, wie anhand der Figuren 3 bis 5 erläutert) über die Außenseite 33 der Polymerfolie 32 und durch die teildurchlässige Reflexionsschicht 38 hindurch auf eine Zone 42 fokussiert, die in Figur 6 durch Schraffur angedeutet ist. Zu Beginn dieses Vorgangs sind die Unterseite der,Polymerfolie 32 (d.h. die Grenzfläche zu der Reflexionsschicht 38) sowie die Reflexionsschicht 38 noch eben. Da die Zone 42 im Bereich der Absorberschicht 34 liegt, wird die Lichtenergie des Schreibstrahls dort effizient in Wärme umgewandelt. Wegen der schlechten Wärmeleitfähigkeit des Materials kommt es in einem eng begrenzten Volumen zu einer signifikanten Temperaturerhöhung, bei der sich die Grenzflächenstruktur der Polymerfolie 32 lokal verändert. Auf diese Weise entsteht ein Pit 40, d.h. der lokale Bereich, in dem Information abgelegt ist. Zu jedem Pit 40 gehört eine zentrale Vertiefung 44 in der Polymerfolie 32, die von einer peripheren, mehr oder weniger ringförmigen Aufwerfung 45 umgeben ist. Der Niveauunterschied zwischen dem tiefsten Punkt der Vertiefung 44 und dem höchsten Punkt der Aufwerfung 45, d.h. die lokale maximale Höhenänderung der Grenzflächenstruktur in dem Pit 40, ist in Figur 6 mit H bezeichnet. H liegt typischerweise im Bereich von 50 nm bis 500 nm. Der Abstand zwischen den Zentren zweier benachbarter Pits 40 beträgt vorzugsweise etwa 1 µm bis 2 µm. Im Ausführungsbeispiel hat ein Pit 40 einen Durchmesser von etwa 0,8 µm. Andere Formen als runde Pits 40 sind ebenfalls möglich. Vorzugsweise beträgt die typische Abmessung eines Pits etwa 0,5 µm bis 1,0 µm.

In einem Pit 40 kann die Information in binär kodierter Form gespeichert sein, indem H nur zwei verschiedene Werte annimmt (wobei einer der beiden Werte vorzugsweise 0 ist). Es ist auch möglich, in einem Pit 40 Information in kontinuierlich kodierter Form zu speichern, wobei H für ein gegebenes Pit 40 einen beliebig ausgewählten Wert aus einem vorgegebenen Wertebereich annehmen kann.

Ansonsten kann die Information in den Datenspeicher 31 auf ähnliche Weise eingegeben werden wie in den Datenspeicher 11, also vorzugsweise mit dem Schreibstrahl eines Laserlithographen, der im gepulsten Betrieb über die Polymerfolie 32 geführt wird und dabei die Pits 40 in vorberechneter Weise erzeugt. In Aufsicht sieht dann die Polymerfolie 32 mit den Pits 40 ähnlich aus wie die Darstellung in Figur 3.

In Figur 6 ist ferner in schematischer Weise veranschaulicht, wie die in dem Datenspeicher 31 gespeicherte Information ausgelesen werden kann. Dazu wird kohärentes Licht von einem Laser (vorzugsweise einer Wellenlänge, die von der Absorberschicht 34 nicht oder nur geringfügig absorbiert wird) auf die Außenseite 33 des Datenspeichers 31 gerichtet. (Alternativ kann auch eine sehr helle LED eingesetzt werden, die unter Umständen sogar zu günstigeren Ergebnissen führt, vor allem im Hinblick auf eine Verminderung von sogenanntem Speckles-Rauschen.) Der Übersichtlichkeit halber ist von diesem vorzugsweise parallel einfallenden kohärenten Licht (einfallender Lesestrahl) in Figur 6 nur ein kleiner Ausschnitt dargestellt, nämlich die mit 46 und 47 bezeichneten einfallenden Lichtwellen. In der Praxis ist das kohärente Licht großflächig auf die Polymerfolie 32 gerichtet und überdeckt einen Bereich von z.B. 1 mm². Denn zur Rekonstruktion der abgespeicherten Information muss das von vielen Pits 40 ausgehende Licht erfasst werden. Die Intensität des einfallenden Lesestrahls ist zu schwach, um die Grenzflächenstruktur der Polymerfolie 32 und somit die abgespeicherte Information zu verändern.

Die Lichtwellen 42 und 43 haben zueinander eine feste Phase Φ. Sie fallen aus praktischen Gründen unter einem Winkel auf die Außenseite 33 der Polymerfolie 32, durchdringen die Polymerfolie 32 und werden an der Reflexionsschicht 38 teilweise reflektiert, so dass reflektierte Lichtwellen 48 und 49 von der Reflexionsschicht 38 ausgehen und wiederum die Polymerfolie 32 durchdringen. Der Übersichtlichkeit halber ist der durch die teildurchlässige Reflexionsschicht 38 hindurchtretende Anteil der einfallenden Lichtwellen 46 und 47 in Figur 6 nicht dargestellt. Da die lokale Grenzflächenstruktur der Polymerfolie 32 über die Pits 40 variiert, kommt es zu einer Phasenverschiebung, und die reflektierten Lichtwellen 48 und 49 treten mit einer Phase Ψ aus, wie in Figur 6 veranschaulicht. Dies hat zur Folge, dass von dem Datenspeicher 31 nach Art eines Beugungsgitters Lichtwellen in viele Richtungen ausgehen, in denen Phaseninformation enthalten ist. In einigem Abstand von dem Datenspeicher 31 kann mit einem Detektor ein holographisches Bild erfasst werden, das durch Interferenz dieser Lichtwellen zustande kommt und eine Rekonstruktion der gespeicherten Information darstellt.

Anhand der Figuren 5 und 6 sind zwei verschiedene Möglichkeiten erläutert, wie eine lokale Veränderung an der Polymerfolie 12 bzw. 32 zur Informationsspeicherung genutzt werden kann. Zwischenformen, also sowohl eine Veränderung der Brechzahl als auch der Grenzflächenstruktur der Polymerfolie in einem Pit, sind ebenfalls denkbar.

Grundsätzlich können die erläuterten Methoden zum Eingeben und Auslesen von Information auch dann verwendet werden, wenn keine Reflexionsschicht 18 bzw. 38 vorhanden ist. So lässt sich ein Schreibstrahl auch ohne Hilfe einer Reflexionsschicht fokussieren. Beim Auslesen von Information in Reflexion kann ein Unterschied der Brechzahl zwischen zwei Schichten genutzt werden. Ferner sind Ausführungsformen für den holographischen Datenspeicher denkbar, bei denen der Datenspeicher beim Auslesen von Information in Transmission durchstrahlt wird.

In Figur 7 ist ein drittes Ausführungsbeispiel für einen Schichtenaufbau des holographischen Datenspeichers in schematischem Längsschnitt dargestellt. Der mit 1" bezeichnete Datenspeicher enthält eine Polymerfolie 2, die als Speicherschicht und Decklage mit einer exponierten Außenseite 3 dient.. Unterhalb der Polymerfolie 2 und daran angrenzend befindet sich eine Absorberschicht 4' . Zwischen der Absorberschicht 4' und einer Klebstoffschicht 6 an der Unterseite (die im Lieferzustand mit einer Schutzlage abgedeckt ist) ist eine Reflexionsschicht 8' angeordnet. Im Ausführungsbeispiel besteht die Reflexionsschicht 8' aus Aluminium und ist so dick, dass sie undurchlässig ist und maximal reflektiert.

Bei diesem Schichtenaufbau erleichtert die Reflexionsschicht 8' wiederum das Fokussieren des Schreibstrahls auf die Absorberschicht 4'. Ferner wird beim Auslesen der eingegebenen Information die Absorberschicht 4' durchstrahlt.

Wenn der in der Absorberschicht 4' enthaltene Absorberfarbstoff beim Eingeben von Information (z.B. mit Hilfe eines Laserlithographen) lokal ausbleichbar ist, lässt sich eine zur Informationsspeicherung genutzte Veränderung nicht nur durch die lokale Erwärmung des Absorberfarbstoffs und die dadurch bewirkte lokale Änderung an der Polymerfolie 2 erzielen (wie oben erläutert), sondern zusätzlich auch durch eine lokale Änderung der optischen Eigenschaften des Absorberfarbstoffs, nämlich des Absorptionsvermögens. Beim Auslesen von Information aus dem Datenspeicher 1" werden bei dem Schichtenaufbau gemäß Figur 7 beide Effekte genutzt, was in einer Kontrastverstärkung des Auslesesignals resultiert.

In der folgenden Tabelle 1 sind Farbstoffe aufgelistet, die sich grundsätzlich als Absorberfarbstoff für die Absorberschicht des holographischen Datenspeichers eignen. In der ersten Spalte ist die Wellenlänge (in nm) des Absorptionsmaximums angegeben; die Tabelle 1 ist nach steigenden Wellenlängen geordnet, sofern Wellenlängen vorliegen. Soweit verfügbar, sind auch der Farbindex (CI) sowie eine synonyme Bezeichnung angeführt.

**Tabelle 1 Farbstoffe, die grundsätzlich als Absorberfarbstoffe geeignet sind**

| **Wellenlänge** | **Name** | **Cl** | **Synonym** |
|---|---|---|---|
| | 2.3.4-Triazapentamethincyanin | | |
| | Acridiniumgelb | | |
| | Alizarinschwarz S | | |
| | Amidogelb E | | |
| | Anilingelb | | |
| | Anilinschwarz | | |
| | Anilinsulfonphthalein | | |
| | Anilinviolett | | |
| | Anthrasolblau IBC | | |
| | Antiker Purpur | | 6.6'-Dibromindigo |
| | Artisilblau GLF | | |
| | Astraphloxin FF | | |
| | Astrazonblau FGGL | Cl 11105 | |
| | Astrazongelb 3 GL | | |
| | Astrazonrot G | | |
| | Benzaurin | | |
| | Benzolichtgelb 4GL | | |
| | Benzylorange | | |
| | Bindschedlers Grün | | |
| | Brasilein | | |
| | Brillantindigo 4B | | Cibablau 2B |
| | Brillantorange RK | | |
| | Bromphenolblau | | |
| | Bromphenolrot | | |
| | Bromthymolblau | | |
| | Bromxylenolblau | | |
| | Buttergelb | | |
| | Caledonrot XB5 | | |
| | Capriblau | | |
| | Capriblau | | |
| | Carbazolindanilin | | |
| | Carbolanviolett 2R | | |
| | Carthamin | | |
| | Cellitonechtblaugrün B | | |
| | Chinolinblau | | |
| | Chlorantinüchtgrün BLL | | |
| | Chlorantinlichttürkisblau GLL | | |
| | Chromviolett Gy | | |
| | Cibacetylviolett | | |
| | Cibanonrot 4B | | |
| | Cibanönrot G | | |
| | Doebners Violett | | |
| | Epsilonblau | | |
| | Fanalfarben | | |
| | Fluorenchinon | | |
| | Gelborange S | Cl 15985 | |
| | Grünsensibilator MA2116 | | |
| | Hämatein | | |
| | Helindonorange | | |
| | Helindonrosa | | |
| | Helloechtgelb 5GK | | |
| | Heliogengrün G | | |
| | Hydronblau R | | |
| | Hypericin | | |
| | Immedialbrillantblau | | |
| | Immedialgelb GG | | |
| | Immedialreinblau | | |
| | Immedialschwarz | | |
| | Indanthengelb | | |
| | Indanthrenblau GCD | | |
| | Indanthrenblau RS | | |
| | Indanthrenbordeaux RR | | |
| | Indanthrenbrillantblau 4G | | |
| | lndanthrenbrillantgrün FFB | | |
| | Indanthrenbrillantorange GR | | |
| | Indanthrenbrillantviolett 2R | | |
| | Indanthrenkhaki GG | | |
| | Indanthrenorange 2RT | | |
| | Indanthrenrotbraun 5RF | | |
| | Indanthrenrotviolett | | |
| | Indanthrentürkisblau 3GK | | |
| | Indanthrenviolett RRK | | |
| | Indathrengelb 5GK | | |
| | Indigogelb 3G | | |
| | Indischgelb | | |
| | Indrarot | | |
| | Irgalanbraunviolett DL | | o.o'-Dihydroxy-azofarb. |
| | Isoviolanthron | | |
| | Juglon | | |
| | Krapplacke | | |
| | Lackrot | | |
| | Lumogen | | |
| | Mauvein | | |
| | Maxilonrot BL | | |
| | Michlers Hydroblau | | |
| | Morin | Cl 75660 | |
| | Muscaflavin | | |
| | Muscarufin | | |
| | Naphthalingrün V | | |
| | Neolanblau 2G | | |
| | Nitramin | | |
| | Ölgelb | | 3.2'-Dimethyl-4-aminoazobenzol |
| | Oxonin | | |
| | p-Xylenolblau | | |
| | Palanilrosa RF | | |
| | Paramethylrot | | |
| | Patentblau | | |
| | Patentblau V | Cl 42501 | |
| | Permanentviolett RL | | |
| | Phenylenblau | | |
| | Phthalogenblau IBN | | |
| | Phthalogenblauschwarz IVM | | |
| | Pinachromblau | | |
| | Procinylblau R | | |
| | Pseudocyanin | | |
| | Rubinpigment BK | | |
| | Sambesischwarz V | | |
| | Säurefuchsin | | |
| | Schwefelschwarz T | | |
| | Supracenblau SES | | |
| | Thioindigo | | Helindonrot 2B;Algolrot 5B; Küpenrot B |
| | Thionoultragrün B | | |
| | Thiopyronin | | |
| | Toluylenblau | | |
| | Vidalschwarz | | |
| | Violanthron | | |
| | | | |
| 1080 | IR 26 | | |
| 1090 | IR 5 | | |
| 229/345 | Primulin | Cl 49000 | |
| 251 | BM-Terphenyl | | 2,2"-Dimethyl-p-terphenyl |
| 266 | TMQ | | 3,3',2",3"'-Tetramethyl-p-quaterphenyl |
| 275 | BMQ | | 2,2"'-Dimethyl-p-quaterphenyl |
| 275 | p-Terphenyl | | PTP |
| 285 | DMQ | | 2-Methyl-5-t-butyl-p-quaterphenyl |
| 295 | TMI | | 2,5,2"",5""-tetramethyl-p-quinquephenyl |
| 297 | p-Quaterphenyl | | PQP |
| 302 | Butyl-PBD | | 2-(4-Biphenylyl)-5-(4-t-butylphenyl)-1,3,4-oxadiazol |
| 302 | PBD | | 2-(4-Biphenylyl)-5-phenyl-1,3,4-oxadiazol |
| 303 | PPO | | 2,5-Diphenyloxazol |
| 308 | Polyphenyl 1 | | p-Quaterphenyl-4,4"*'*-disufonicacid Disodiumsalt |
| 308 | Polyphenyl 2 | | p-Quaterphenyl-4,4"*'*-disulfonicacid Dipotassiumsalt |
| 310 | QUI | | 3,5,3"",5""-Tetra-t-butyl-p-quinquephenyl |
| 313 | BiBuQ | | 4,4"*'*-Bis-(2-butyloctyoxy)-p-quaterphenyl |
| 314 | BBD | | 2,5-Bis-(4-biphenylyl)-1,3,4-oxadiazol |
| 320 | TBS | | 3,5,3""*'*,5""*'*-Tetra-t-butyl-p-sexiphenyl |
| 324 | PPF | | 2,5-Diphenylfuran |
| 327 | PBBO | | 2-(Biphenylyl)-6-phenylbenzoxazol-1,3 |
| 330 | Furan 2 | | 2-(4-Biphenylyl)-6-phenylbenzoxazotetrasulfonic-acid Potassium Salt |
| 333 | a-NPO | | 2-(1-Naphthyl)-5-phenyl-phenyloxazol |
| 340 | BBO | | 2,5-Bis-(biphenylyl)-oxazol |
| 340 | DPS | | 4,4'-Diphenylstilbene |
| 341 | Direktgelb 62 | Cl 36900 | |
| 342 | Echtrotviolettsalz LB | | |
| 347 | 4-Hydroxyazobenzol | Cl 11800 | |
| 350 | Bis-MSB | | p-Bis(o-methylstyryl)-benzene |
| 350 | Carbostyryl7 | | 7-Amino-4-methylcarbostyryl |
| 350 | Stilbene 1 | | [1,1'-Biphenyl]-4-sulfonic acid, 4,4"-1,2-ethene-diylbis-, dipotassium salt |
| 350 | Stilbene 3 | | 2,2'-([1,1'-Biphenyl]-4,4'-diyldi-2,1-ethenediyl)-bis -benzenesulfonic acid |
| 352 | Echtrotsalz PDC | Cl 37151 | |
| 354 | Coumarin 120 | | 7-Amino-4-methylcoumarin |
| 354 | Kristallviolett Lacton | | |
| 354 | Mordant Gelb 10 | Cl 14010 | |
| 355 | Furan 1 | | Benzofuran,2,2'-[1,1'-biphenyl]-4,4'-diyl-bis-tetrasulfonic acid |
| 355 | Quinolon | | 7-Dimethylamino-1-methyl-8-azaquinolone-2 |
| 356 | Echtkorinthsalz Vkz. | Cl 37220 | |
| 357 | Cellitonechtgelb G | Cl 11855 | |
| 357 | Echtrotsalz ITR | Cl 37150 | |
| 358 | POPOP | | 1,4-Di[2-(5-phenyloxazolyl)]bezene |
| 359 | Dispersionsgelb 9 | Cl 10375 | N-(2,4-Dinitrophenyl)-p-phenylendiamin |
| 360 | Carbostyryl 3 | | 7-Dimethylamino-4-methylquinolon-2 |
| 360 | Echtgranatsalz | Cl 37210 | |
| 362 | Alizaringelb GG | Cl 14025 | Mordant Gelb1 |
| 362 | Naphthochromgrün | Cl 44530 | Mordant Grün 31 |
| 366 | Coumarin 2 | | 7-Amino-4-methylcoumarin |
| 368 | Walkgelb O | Cl 25135 | |
| 371 | Echtblausalz B | Cl 37235 | |
| 372 | Coumarin 4 | | 7-Hydroxy-4-methylcoumarin |
| 372 | Echtrotsalz RC | Cl 37120 | |
| 373 | Coumarin 47 | | 7-Diethylamino-4-methylcoumarin |
| 373/487 | Mordant Braun 1 | Cl 20110 | |
| 374 | Thioflavin S | Cl 49010 | Direktgelb |
| 375 | Echtrotsalz B Tetrafluoroboratsalz | Cl 37125 | |
| 377 | Variaminblausalz RT | Cl 37240 | |
| 378 | Thiazolylblau | | 3-(4,5-Dimethyl-2-thiazolyl)-2,5-diphenyltetrazoliumbromid |
| 380 | 1-Methoxyanthrachinon | Cl 37325 | |
| 380 | Coumarin 466 | | 7-Diethylaminocoumarin |
| 380 | Mordant Gelb 12 | Cl 14045 | |
| 382 | Coumarin 151 | | 7-Amino-4-trifluormethylcoumarin |
| 382 | Echtblau | | Diamidino 253/50 |
| 385 | Alizaringelb R | Cl 14030 | Mordant Orange1, 5-(p-Nitrobenzolazo)-salicylsäure |
| 385 | Cellitonechtgelb 5R | Cl 26090 | 7,4'-Benzolazo-4-hydroxy-3-methylazobenzol |
| 385 | Pinakryptolgelb | | |
| 386 | Mordant Orange 10 | Cl 26560 | |
| 388 | Sudanorange G | Cl 11920 | 2,4-Dihydroxyazobenzol |
| 389 | Chrysophenin | Cl 24895 | Direktgelb 12 |
| 389 | Coumarin 102 | | 2,3,5,6-1H,4H-Tetrahydro-8-methylquinolizino-[9,9a,1-gh]-coumarin |
| 390 | Direktgelb 50 | Cl 29025 | Siriuslichtgelb Rex |
| 390 | Direktgelb 8 | Cl 13920 | |
| 392 | Supramingelb R | Cl 18835 | Säuregelb 25 |
| 393 | Direktgelb 27 | Cl 13950 | |
| 393 | Säuregelb 76 | Cl 18850 | Polargelb 2G |
| 394 | Naphthol AS | Cl 37505 | 2-Hydroxy-3-naphthoesäureanilid |
| 395 | Coumarin 307 | | 7-Ethylamino-6-methyl-4-trifluormethylcoumarin |
| 395 | Coumarin 500 | | 7-Ethylamino-4-trifluormethylcoumarin |
| 395 | Echtblausalz BB | Cl 37175 | |
| 396 | Coumarin 6H | | 2,3,5,6-1H,4H-Tetrahydroquinolzino-[9,9a,1-gh]coumarin |
| 397 | Brillantgelb | Cl 24890 | |
| 397 | Coumarin 152 | | 7-Dimethylamino-4-trifluormethylcoumarin |
| 400 | Mesoporphyrin-IX-dimethylester | | 7,12-Diethyl-3,8,13,17-tetramethyl-21H,23H-porphin-2, 1 8-dipropionsäuredimethylester |
| 400 | Mordant Braun 24 | Cl 11880 | 3-(3,5-Dinitro-2-hydroxy-benzolazo)-2-hydroxy-5-methylacetanilid |
| 400 | Säuregelb 17 | Cl 18965 | |
| 401 | Mesoporphyrin-IX-Dihydrochlorid | | 7,12-Diethyl-3,8,13,17-tetramethyl-21H,23H-porphin-2,18-dipropionsäure |
| 402 | Thiazolgelb G | Cl 19540 | Titangelb |
| 403 | Pyranin | Cl 59040 | 8-Hydroxypyren-1,3,6-trisulfonsäure Trinatriumsalz |
| 404 | Cibachron Brillantgelb 3G-P | Cl 18972 | Reaktivgelb |
| 405 | 1-Hydroxyanthrachinon | | |
| 405 | Coumarin 152A | | 7-Diethylamino-4-trifluormethylcoumarin |
| 407 | Flavazin L | Cl 18820 | |
| 407 | Supramingelb 3GL | Cl 18900 | Säuregelb 29 |
| 408 | Echtlichtgelb D3GA | Cl 18890 | Säuregelb 34 |
| 410 | Coumarin 522 | | N-Methyl-4-trifluormethylpiperidino-[3,2-g]-coumarin |
| 410 | Methylrot | Cl 13020 | 4'-(Dimethylamino)-azobenzol-2-carbonsäure |
| 410 | Sulfongelb R | Cl 22910 | Säuregelb 42 |
| 412 | Chinolingelb S | Cl 47005 | |
| 412 | Coumarin 30 | | 3-(2'-N-Methylbenzimidazolyl)-7-N,N-diethylaminocoumarin |
| 412 | Säuregelb 40 | Cl 18950 | |
| 412 | Thioflavin TCN | Cl 49005 | 3,6-Dimethyl-2-(4-dimethylaminophenyl)-benzothiazoliumchlorid |
| 413 | Mordant Rot 19 | Cl 18735 | 5-Chlor-2-hydroxy-3-(5-hydroxy-3-methyl-1-phenyl-4-pryazlolylazo)-benzosulfonsäure Natriumsalz |
| 414 | Echtseidengelb G | Cl 14170 | Säuregelb 65 |
| 414 | Metanilgelb | Cl 13065 | Tropaeolin |
| 419 | Bromkresolpurpur | | 5',5"-Dibrom-0-kresolsulfonphthalein |
| 422 | Brillantsulfaflavin | | |
| 422 | Bromphenolblau | | 3',3",5',5"Tetrabromphenolsulfonphthalein |
| 423 | Bromkresolgrün | | 3',3",5',5"-Tetrabrom-m-kresolsulfonphthalein |
| 423 | Coumarin 153 | | 2,3,5,6-1 H,4H-Tetrahydro-8-trifluormethylquinolizino-[9,9a,1-gh]coumarin |
| 423 | Phenolrot Natriumsalz | | |
| 424 | 3,3'-Diethyl-thiacyaniniodid | | |
| 424 | Säureorange 63 | Cl 22870 | |
| 425 | Coumarin 510 | | 2,3,5,6-1H,4H-Tetrahydro-9-(3-pyridil)-quinolizino-[9,9a,1-gh]coumarin |
| 425 | Tartrazin | Cl 19140 | |
| 427 | Dispersionsorange 13 | Cl 26080 | 1-Benzolazo-4-(4-hydroxybenzolazo)-naphthalin |
| 427/452 | Safran | Cl 75100 | Saffron, Crocus |
| 428/392 | Citronin A | Cl 10316 | Naphtholgelb S; 2,4-Dinitro-1-naphthol-7-sulfonsäure Dinatriumsalz |
| 430 | Curcumin | Cl 75300 | Diferuloylmethan |
| 430 | Martiusgelb | | 2,4-Dinitro-1-naphthol |
| 433 | Coumarin 7 | | 3-(2'-Benzamidazylyl)-7-N,N-diethylaminocoumarin |
| 434/370 | Auramin O | Cl 41000 | 4,4'-(imidocarbonyl)-bis-(N,N-dimethylanilin) Hydrochlorid |
| 436 | Coumarin 314 | | 2,3,5,6-1H,4H-Tetrahydro-9-carboethoxyquinolizino-[9,9a,1-gh]coumarin |
| 439 | Chinolingelb A | Cl 47000 | Chinophthalon |
| 440 | Fluorol 7GA | | |
| 440 | Naphthylrot Hydrochlorid | | 4-Benzolazo-1-naphthylamin Hydrochlorid |
| 440 | Palatinechtgelb BLN | Cl 19010 | Acid Yellow 54 |
| 442 | Acridingelb | Cl 46025 | 3,6-Diamino-2,7-dimethylacridin Hydrochlorid |
| 442 | Mordant Braun 33 | Cl 13250 | |
| 443 | Cellitonechtorange GR | Cl 11005 | 4-Amino-4'-nitroazobenzol |
| 445 | Säuregelb 99 | Cl 13900 | |
| 446 | Supranolbraun 4R | Cl 26550 | Säureorange 51 |
| 449 | Chrysoidin G | Cl 11270 | |
| 450 | 4',5'-Dibromfluorescein | Cl 45370 | |
| 450 | Coumarin 334 | | 2,3,5,6-1H,4H-Tetrahydro-9-acetylquinolizino-[9,9a,1-gh]-coumarin |
| 451 | Fettbraun RR | Cl 11285 | |
| 452 | 2-Hydroxy-1,4-naphthochinon | Cl 75480 | Lawson |
| 455 | Säureorange 74 | Cl 18745 | |
| 457 | Dispersionsorange 25 | | |
| 457 | Echtschwarzsalz | Cl 37190 | |
| 458 | Chromazurol S | Cl 43825 | Mordantblau 29 |
| 458 | Coumarin 6 | | 3-(2'-Benzothiazolyl)-7-diethylaminocoumarin |
| 462 | Trypaflavin | | Acriflavin |
| 465 | 1-Aminoanthrachinon | | |
| 468 | Bismarckbraun R | Cl 21010 | Vesuvin R |
| 472 | DASPI | | 2-(p-Dimethylaminostyryl)-pyridylmethyl lodide |
| 472 | DCM | | 4-Dicyanmethylene-2-methyl-6-(p-dimethylaminostyryl)-4H-pyran |
| 475 | Orange G | Cl 16230 | Acid Orange 10 |
| 476/418 | Sudan I | Cl 12055 | Sudangelb |
| 480 | 1,5-Diaminoanthrachinon | | |
| 480 | Pyridine 1 | | 1-Ethyl-2-(4-(p-Dimethylaminophenyl)-1,3-butandienyl)-pyridinium Perchlorat |
| 482 | Aurin | Cl 43800 | 4-[Bis-(4-hydroxyphenyl)-methylen]-2,5-cyclohexadien-1-on |
| 482 | Crocelnorange G | Cl 15970 | Ponceau 4 GB; 5-Benzolazo-6-naphthol-2-sulfonsäure Natriumsalz |
| 483 | Cellitonechtorange 5R | Cl 11080 | 4-Anilino-4'-nitroazobenzol |
| 483 | Orange II | Cl 15510 | Säureorange A; 4-(2-Hydroxy-1-naphthalinazo)-benzolsulfonsäure Natriumsalz |
| 485 | DOCI | | 3,3'-Diethyloxacarbocyanin Iodid |
| 486 | Cellitonorange R | Cl 60700 | 1-Amino-2-methyl-anthrachinon |
| 489 | Echtgelb ex. | Cl 13015 | Säuregelb-R; 4-Aminoazobenzol-3,4'-disulfonsäure Natriumsalz |
| 490 | Astrazonorange G | Cl 48035 | |
| 490 | Orange ROF | Cl 15575 | Acid Orange 8 |
| 490 | Resorcingelb | Cl 14270 | Tropaeolin O; 2,4-Dihydroxy-azobenzol-4'-sulfonsäure Natriumsalz |
| 491 | Echtgranat GBC Base | Cl 11160 | 4-Amino-2',3-dimethylazobenzol |
| 492 | Acridinorange | Cl 46005 | 3,6-Bis-(dimethylamino)-acridin Hydrochlorid Hydrat |
| 492 | Mordant Braun 48 | Cl 11300 | 2-(5-Chlor-2,4-diaminobezol-azo)-4,6-dinitrobenzol |
| 493/420 | Sudan II | Cl 12140 | Sudanorange, Fettscharlach G; 1-(2,4-Dimethylbenzolazo)-2-naphthol |
| 494 | Pyrromethen 546 | | 4,4'-Difluoro-1,3,5,7,8-pentamethyl-4-bor-3a,4a-diaza-s-indacene |
| 494 | Säurerot 183 | Cl 18800 | |
| 494/388 | Remazolbrillantorange 3 R | Cl 17757 | Reaktivorange 16 |
| 495 | Dispersionsrot 19 | Cl 11130 | 4-[Bis-(2-hydroxyethyl)-amino]-4'-nitroazobenzol |
| 496 | Fluorescein | Cl 45350 | |
| 497 | Kongorot | Cl 22120 | 4,4'-Bis-(4-amino)-sulfo-3-naphthylazo)-biphenyl Dinatriumsalz |
| 498 | Pyrromethene 556 | | Disodium-1,3,5,7,8-pentamethylpyrromethene-2,6-disulfonate-difluoroborate complex |
| 498 | Säureanthracenrot G | Cl 22890 | Säurerot 97 |
| 500 | Echtscharlach | Cl 23500 | Saffrosin, Benzopurpurin 4B |
| 500 | Pyridine 2 | | 1-Ethyl-4-(4-(p-Dimethylaminophenyl)-1,3-butandienyl)-pyridinium Perchlorat |
| 500 | Uranin | | Disodium Fluorescein |
| 500/374 | Mordant Braun 4 | Cl 11335 | 2-(2,4-Diamino-5-methyl-benzolazo)-4,6-dinitrophenol |
| 501 | Rhodamin 123 Hydrat | | |
| 501 | Säurealizarinviolett N | Cl 15670 | Mordant Violett 5; Pontachromviolett SW |
| 502 | Cellitonscharlach B | Cl 11110 | Dispersionsrot 1 |
| 503 | Cellitonechtrubin B | Cl 11115 | Dispersionsrot 13 |
| 503 | Mordant Schwarz 11 | Cl 14645 | Eriochromschwarz T |
| 503/388 | Ponceau R | Cl 16150 | Xylidin-Ponceau 2R |
| 504 | Allura Rot AC | Cl 16035 | |
| 505 | | Cl 12100 | Solvent Orange 2 |
| 505 | Echtrot A | Cl 15620 | Roccellin, Säurerot 88; 2'-Hydroxy-(1,1')-azonaphthalin-4-sulfonsäure Natriumsalz |
| 505 | Ponceau BS | Cl 26905 | Biebricher Scharlach |
| 506/350 | Cochenillerot | Cl 16255 | Neucoccin, Brillantscharlach 4R,Scharlach N, Viktoriascharlach 4R |
| 507 | Benzoechtscharlach 4BS | Cl 29160 | Direktrot 23 |
| 507 | Mercurochrom | | |
| 507 | Methylorange | Cl 13025 | |
| 507/354 | Sudan III | Cl 26100 | |
| 507/398 | Toluidinrot | Cl 12120 | |
| 508 | 1-Methylaminoanthrachinon | | |
| 508/376 | Echtsäurerot E | Cl 14710 | Säurerot 4 |
| 508/397 | Direktrot 81 | Cl 28160 | Chlorantinlichtrot-5BL |
| 508/532 | Cochenillescharlach PS | Cl 14900 | Säurerot 8 |
| 510 | Brillantcrocein MOO | Cl 27290 | Baumwollscharlach; Säurerot 73 |
| 510 | Kristallponceau | Cl 16250 | |
| 510 | Rhodamin 110 | | o-(6-Amino-3-imino-3H-xanthen-9-yl)-benzoic acid |
| 510/530 | Chromotrop 2R | Cl 16570 | Säurerot 29 |
| 512 | Chromoxancyanin R | Cl 43820 | Mordant Blau 3 |
| 512 | Fluorescein 27 | | 9-(o-Carboxyphenyl)-2,7-dichloro-6-hydroxy-3H-xanthen-3-on |
| 512/356 | Tüchscharlach | Cl 26900 | Säurerot 151 |
| 514 | Chromotrop 2B | Cl 16575 | |
| 514/351 | Ponceau SS | Cl 27190 | Tuchrot G, Wollrot B |
| 514/365 | Supranolrot PBX | Cl 23635 | Säurerot 114 |
| 514/395 | Eosin B | Cl 45400 | Eosinscharlach |
| 515/383 | Azorubin | Cl 14720 | Mordantblau 79; Chromotrop FB |
| 515/521 | Purpurin | Cl 58205 | Rauchbraun G, Krapp-Purpur |
| 516 | Azocarmin BX | Cl 50090 | Säurerot 103 |
| 516 | Mordant Blau 9 | Cl 14855 | |
| 517 | Cibachron Brillantrot 3B-A | Cl 18105 | Reaktivrot |
| 517 | Eosin bläul. | | |
| 517 | Eosin gelbl. | Cl 45380 | |
| 518 | Echtrot B | Cl 16180 | Bordeaux R |
| 518 | Helioechtrubin BBL | Cl 60760 | |
| 518 | Pyrromethene 567 | | 4,4-Difluoro-2,6-diethyl-1,3,5,7,8-pentamethyl-4-bora-3a,4a-diaza-s-indacene |
| 518/359 | Ölrot O | Cl 26125 | Solvent Red 27 |
| 519 | Phenosafranin | Cl 50200 | Safranin B extra |
| 519 | Pyrromethene 580 | | 4,4-Difluoro-2,6-di-n-butyl-1,3,5,7,8-pentamethyl-4-bora-3a,4a-diaza-s- indacene |
| 520 | 1-Hydroxy-4-aminoanthrachinon | | |
| 520 | Amidonaphtholrot 6B | Cl 18055 | |
| 520 | Methyleosin | Cl 45385 | |
| 520/352 | Ponceau S | Cl 27195 | |
| 520/357 | Sudan IV | Cl 26105 | (Biebricher-) Scharlachrot |
| 521 | Amaranth | Cl 16185 | Azorubin S, Echtrot D |
| 521 | Echtrot D | | Azorubin S |
| 521 | Emodine | | |
| 521 | Ölrot EGN | Cl 26120 | Solvent Red 26 |
| 521 | Sudanrot B | Cl 26110 | |
| 522 | Dijodfluorescein | Cl 45425 | |
| 522 | Eosin B alkohollösl. | Cl 45400 | |
| 522 | Siriusrosa BB | Cl 25380 | Direktrot 75, Benzoechtrosa 2BL |
| 524 | 1,1'-Diethyl-2,2'-cyaniniodid | | |
| 524 | Pyrromethene 597 | | 4,4-Difluoro-2,6-di-t-butyl-1,3,5,7,8-pentamethyl-4-bora-3a,4a-diaza-s-indacene |
| 524 | Rhodamin 6G | Cl 45160 | Benzoic Acid, 2-[6-(ethylamino)-3-(ethylimino)-2,7-dimethyl-3H- xanthen-9-yl]-ethyl ester, monohydrochlorid |
| 525 | Erythrosin B | Cl 45430 | |
| 525 | Mordant Violett | Cl 43810 | Eriochromcyanin RC |
| 525 | Murexid | | |
| 527 | Lanafuchsin 6B | Cl 18125 | Säureviolett |
| 527 | Mordant Blau 13 | Cl 16680 | Eriochromblau SE |
| 528 | Chinaldinrot | | |
| 528 | Direktrot 80 | Cl 35780 | Siriusrot F3B |
| 528 | Mordant Schwarz 3 | Cl 14640 | Eriochromblauschwarz B |
| 528 | Rhodamin 19 | | Benzoic Acid, 2-[6-(ethylamino)-3-(ethylimino)-2,7-dimethyl-3H-xanthen-9-yl], perchlorate |
| 529 | Echtsäureviolett ARR | Cl 45190 | Eriofuchsin A2R |
| 529 | Sulforhodamin G | Cl 45220 | |
| 530 | DASBTI | | 2-(p-Dimethylaminostyryl)-benzothiazolylethyl Iodid |
| 530 | Safranin T | Cl 50240 | Saffranine O |
| 531/563 | Carminsäure | Cl 75470 | Carmin |
| 532 | Eosin alkohollösl. | Cl 45386 | Ethyleosin |
| 532/506 | Amidonaphtholrot G | Cl 18050 | Säurerot 1, Azophloxin |
| 533/364 | Sudanrot 7B | Cl 26050 | Fettrot bläulich |
| 538 | Procionrot MX-5B | | Reaktivrot 2 |
| 540 | DMETCI | | 3,3'-Dimethyl-9-ethylthiacarbocyanin lodid |
| 540 | Neutralrot | Cl 50040 | |
| 543 | Rhodamin B | Cl 45170 | |
| 544 | Fuchsin S | Cl 42685 | |
| 544 | Pararosanilin | | Parafuchsin Base |
| 545 | Formylviolett S4B | Cl 42650 | Säureviolett 4B |
| 545 | Parafuchsin Acetat | Cl 42500 | Pararosanilin Acetat |
| 547 | Bismarckbraun Y | Cl 21000 | Vesuvin |
| 548 | Alizarinblauschwarz B | Cl 63615 | |
| 548 | Pyronin Y | Cl 45005 | |
| 548/510 | Eosin 10 B | Cl 45410 | Cyanosin, Phloxin B |
| 549 | Bengalrosa Dina.salz | Cl 45440 | Säurerot 94 |
| 549 | Brillantbenzoechtviolett | Cl 27905 | Siriusviolett BB; Direkt Violett 51 |
| 550 | 1.4-Diaminoanthrachinon | | |
| 550 | Phenoxazone 9 | | 9-Diethylamino-5H-benzo(a)phonoxazin-5-one |
| 550 | Pyridine 4 | | 1-Ethyl-4-(4-(9-(2,3,6,7-tetrahydro-1H,5H-benzo(i,j)-chinolizinium))-1,3-butadienyl)-pyridinium Perchlorat |
| 552/374 | Phenolphthalein | | |
| 552/630 | Rhodanilblau | | |
| 553 | Neufuchsin 90 Plv. | Cl 42520 | Neumagenta, Magenta III |
| 553 | Nilrot | | |
| 553 | Pyronin B | Cl 45010 | |
| 554 | Sulforhodamin B | Cl 45100 | Xylylenrot B |
| 556/596 | Alzarinrot S Hydrat | Cl 58005 | |
| 557 | DTCI | | 3,3'-Diethylthiacarbocyanine lodide |
| 557/360 | Phenolrot | | |
| 558 | Ethylrot | | 1,1'-Diethyl-2,4'-cyaniniodid |
| 560 | 3,3'-Diethyl-thiacarbocyaniniodid | | |
| 565 | Nigrosin alkohollösl. | Cl 50415 | |
| 566 | Sulfoncyanin 5R ex. | Cl 26360 | Säureblau 113 |
| 567/629 | Sulfonazo III | | |
| 569 | Palatinchromschwarz 6BN | Cl 15705 | Mordant Schwarz 17 |
| 570 | Echtneublau 3R | Cl 51175 | Meldola's Blau |
| 570 | Nigrosin wasserlösl. | Cl 50420 | |
| 570 | Styryl 8 | | 2-(4-(p-Dimethylaminophenyl)-1,3-butadienyl)-3-ethylbenzothoazolium Perchlorat |
| 570/367 | Kresolrot | | |
| 570/407 | Brillantschwarz BN | Cl 28440 | |
| 571 | Sulfonsäureblau R | Cl 13390 | Anazolennatrium, Säureblau 92 FG |
| 572 | Chlorphenolrot | | |
| 572 | Sulfoncyaninschwarz BB | Cl 26370 | |
| 574 | Sulfoncyanin GR ex. | Cl 26400 | Säureblau 120 |
| 575 | Lackmus | | |
| 575 | Styryl 11 | | 1-Ethyl-4-(4-(p-Dimethylaminophenyl)-1,3-butadienyl)-quinolinium Perchlorat |
| 576 | Rhodamin 101 | | |
| 576 | Sulforhodamin 101 hydrat | | |
| 579 | Orcein | | Natural Red 28 |
| 579/371 | Kresolpurpur | | |
| 580 | Methylenviolett | Cl 52041 | |
| 582 | DODCI | | 3,3'-Diethyloxadicarbocyanine Iodide |
| 584 | Janusschwarz | | Diazinschwarz |
| 584 | Methylviolett 2B | Cl 42535 | |
| 585 | Brillantblau R | Cl 42660 | Brillantindocyanin 6B |
| 585 | Styryl 9M | | 2-(6-(4-Dimethylaminophenyl)-2,4-neopentylene-1,3,5-hexatrienyl)-3-methyl-benzothiazolium Perchlorat |
| 585/379 | Bromkresolpurpur Natriumsalz | | |
| 586 | Nitrazingelb | Cl 14890 | |
| 588 | Styryl14 | | |
| 589 | Janusblau | Cl 12210 | |
| 590 | Kristallviolett | Cl 42555 | |
| 590 | Pyrromethene 650 | | 4,4-Difluoro-8-cyano-1,2,3,5,6,7-hexamethyl-4-bora-3a,4a- diaza-s-indacene |
| 590 | Resorcinkristaliviolett | | |
| 592 | DQOCI | | 1,3'-Diethyl-4,2'-quinolyloxacarbocyanin lodid |
| 592 | Remazol Brillantblau R | Cl 61200 | Reaktivbau 19 |
| 592 | Viktoriablau B | Cl 44045 | Kornblau B |
| 592/396 | Thymolphthalein | | |
| 594 | Benzolichtblau FFL | Cl 34140 | |
| 594/376 | Thymolblau | | |
| 595 | Alizarinsaphirol B | Cl 63010 | |
| 595 | Procionblau MX-R | Cl 61205 | Reaktivblau 4 |
| 596 | Ethylviolett | Cl 42600 | |
| 596 | Kresyliviolett Acetat | | |
| 597 | Remazol Schwarz B | Cl 20505 | Reaktivschwarz 5 |
| 598 | Thionin Acetat | Cl 52000 | Lauth'sches Violett |
| 598/415 | Sudanschwarz B | Cl 26150 | Fettschwarz |
| 599/374 | Alizarindirektblau AR | Cl 62130 | |
| 600 | Alizarinsaphirol A | Cl 62055 | |
| 600 | Oxonol 595 | | |
| 601 | Gallocyanin | Cl 51030 | |
| 602 | Indigo | | |
| 602 | Indigotin | Cl 73000 | |
| 602 | Kresylviolett Perchlorat | | 5,9-Diaminobenzo[a]phenoxazonium Perchlorat |
| 602 | Säureblau 29 | Cl 20460 | |
| 603 | Alkaliblau 6B/Nicholsonblau | Cl 42750 | |
| 604/560 | Chinaldinblau | | 1,1'-Diethyl-2,2'-carbocyaninchlorid |
| 605 | 2,6-Dichlorphenolindophenol | | Tillmann's Reagenz |
| 605 | Anilinblau | | |
| 605/388 | Tetrabromphenolblau | | |
| 605/642 | Säuregrün 27 | Cl 61580 | |
| 606 | Astrablau Base 6 GLL | | |
| 606 | Astrazonblau GLL | | |
| 606 | DCI-2 | | 1,1'-Diethyl-2,2'-carbocyanin lodid |
| 607 | Cellitonblau ex | Cl 64500 | 1,4,5,8-Tetraaminaanthrachinon |
| 607 | Pinacyanolbromid | | 1,1'-Diethyl-2,2'-carbocyaninbromid |
| 607 | Procionblau HB | Cl 61211, | Reaktivblau 2 |
| 607 | Trypanblau | Cl 23850 | Niagarablau 3B, Diaminblau 3B |
| 608 | Indigocarmin | Cl 73015 | |
| 608 | Phenolblau | | |
| 609/567 | Alizarin | Cl 58000 | 1,2-Dihydroxyanthrachinon |
| 610 | 1,4,5,8-Tetraaminoanthrachinon | | |
| 610/380 | Alizarindirektblau A2G | Cl 62125 | |
| 611 | Evans Blau | Cl 23860 | |
| 612/400 | Bromkresolgrün Natriumsalz | | |
| 614 | Pinacyanol | | 1,1'-Diethyl-2,2'-carbocyaniniodid |
| 614(708 | Kryptocyanin | | |
| 615 | Alcianblau 8 GX | Cl 74240 | |
| 615 | Lissaminblau FFN | Cl 42135 | Xylolcyanol FF |
| 615 | Oxazine 4 | | 3-Ethylamino-7-ethylimino-2,8-dimethylphenoxazin-5-ium Perchlorate |
| 615 | Stenacrilblau RL | Cl 11075 | |
| 615 | Styryl 6 | | 2-(4-(p-Dimethylaminophenyl)-1,3-butadienyl)-1,3,3-trimethyl-3H-indolium Perchlorat |
| 615 | Viktoriablau R | Cl 44040 | |
| 615/425 | Malachitgrün | Cl 42000 | |
| 616 | Azur C | Cl 52002 | |
| 618 | Amidoschwarz 10B | Cl 20470 | Naphtholblauschwarz 6B |
| 618 | Chicagoblau 6B | Cl 24410 | Diaminreinblau FF |
| 618 | Guineagrün B | Cl 42085 | |
| 619 | Viktoriareinblau BO | Cl 42595 | |
| 620 | 1,4-Dianilinoanthrachinon | | |
| 622 | Brillantkresylblau ALD | Cl 51010 | |
| 622/427, | Echtgrün FCF | Cl 42053 | |
| 625/406 | Erioglaucin Dinatriumsalz | Cl 42090 | Alphazurin FG |
| 625/428 | Brillantgrün | Cl 42040 | Malachitgrün |
| 626 | Toluidinblau O | Cl 52040 | Toloniumchlorid , |
| 627 | Oxazine 170 | | 9-Ethylamino-5-ethylimino-10-methyl-5H-benzo(a)phen oxazonium Perchlorat |
| 627/582 | Alizarinreinblau R | Cl 61585 | |
| 628 | Nilblau A Perchlorat | | 5-Amino-9-diethyliminobenzo[a]phenoxazonium Perchlorate |
| 629 | Alizarinbrillantblau RFF | Cl 62058 | |
| 629 | DQTCI | | 1,3'-Diethyl-4,2'-quinolylthiacarbocanine lodide |
| 630 | Oxonol Blau | | |
| 630/422 | Lichtgrün SF gelbl. | Cl 42095 | Säuregrün 5 |
| 630/591 | Neu-Methylenblau N | Cl 52030 | |
| 633 | Azur A | Cl 52005 | |
| 633 | Wollgrün | Cl 44090 | Lissamingrün BN |
| 635/410 | Patentblau VF | Cl 42045 | |
| 635/420 | Methylgrün | Cl 42590 | |
| 637/409 | Patentblau A | Cl 42080 | Alphazurin A |
| 638 | Azur B Thiocyanat | | |
| 638 | Nilblau BX | Cl 51180 | Nilblauchlorid |
| 639 | HIDCI | | 1,1',3,3,3',3'-Hexamethylindocarbocyanin lodid |
| 640/594 | Cellitonechtblau FFR | Cl 61505 | |
| 640/595 | Sudanblau | Cl 61552 | Calco Oelblau N |
| 642 | Coelestinblau B | Cl 51050 | Mordant Blau 14 |
| 642/608 | Alizarincyaningrün G extra | Cl 61570 | |
| 643 | Rhodamin 700 | | |
| 644/595 | Cellitonechtblau B | Cl 61500 | 1,4-Bis-(methylamino)-anthrachinon |
| 644/596 | Ölblau N | Cl 61555 | Solvent Blue 14 |
| 644/607 | Alizarincyaningrün fettlösl | Cl 61565 | |
| 645 | Styryl 20 | | |
| 645/522 | Eosin-Methylenblau | | May-Grünwald-Farbs. |
| 646 | Oxazine 1 | | 3-Diethylamino-7-diethyliminophenoxazonium Perchlorat |
| 648 | Styryl 15 | | |
| 652/604 | Sudanblau II | Cl 61554 | Fettblau B, Solvent Blue 35 |
| 653 | DTDCI | | 3-Diethylthiadicarbocyanin |
| 654 | Rhodulinreinblau 3G | Cl 51004 | Zaponechtblau 3G |
| 655 | Carbazine 122 | | |
| 655 | Dithiazaniniodid | | 3,3'-Diethyl-thiadicarbocyaniniodid |
| 657 | Azur II | Cl 52010 | |
| 657/618 | Methylengrün | Cl 52020 | |
| 660 | Chlorophyll a | Cl 75810 | |
| 660/395 | Janusgrün B | Cl 11050 | Diazingrün |
| 663 | Säureschwarz 48 | Cl 65005 | |
| 665 | Methylenblau | Cl 52015 | |
| 667 | Oxazine 750 | | |
| 675 | Cibachron Türkisblau GF-P | Cl 74459 | Reaktivblau |
| 682 | Methyl-DOTCI | | 3,3'-Dimethyloxatricarbocyanine lodide |
| 682 | Rhodamin 800 | | |
| 694 | Kupferphthalocyanin | Cl 74160 | Heliogenblau B; Monastral Blue B |
| 707 | 1,1'-Diethyl-2,2'-dicarbocyaniniodid | | |
| 710 | DDI | | 1,1'-Diethyl-2,2'-dicarbocyanine lodide |
| 714 | Naphtholgrün B | Cl 10020 | |
| 741 | HITCl | | 1,1',3,3,3',3'-Hexamethylindotricarbocyanine iodide |
| 743 | 1,1'-Diethyl-2,2'-chinotricarbocyaniniodid | | |
| 750 | IR 144 | | |
| 760 | 3,3'-Diethyl-thiatricarbocyaninperchlorat | | |
| 760 | DTTCI | | 3,3'-Diethylthiatricarbocyanine Iodide |
| 765 | 3,3'-Diethyl-thiatricarbocyaniniodid | | |
| 765 | DNTTCI | | 3,3'-Diethyl-9,11-neopentylenethiatricarbocyanine lodide |
| 780 | HDITCl | | 1,1',3,3,3',3'-Hexamethyl-4,4',5,5'-dibenzo-2,2'-indotricarbocyanine Iodide |
| 795 | IR 125 | | |
| 798 | DDTTCl | | 3,3'-Diethyl-4,4 ',5,5' -dibenzothiatricarbocyanine lodide |
| 810 | IR 140 | | |
| 814 | 1,1'-Diethyl-4,4'-dicarbocyaniniodid | | |
| 815 | DDCl-4 | | 1,2'-Diethyl-4,4'-dicarbocyanine Iodide |
| 830 | IR 132 | | |

## Patentansprüche

1. Holographischer Datenspeicher, mit einer als Speicherschicht eingerichteten Polymerfolie (2), die lokal durch Erwärmung veränderbar ist und die als Decklage des Datenspeichers (1; 1') eingerichtet ist, und mit einer unterhalb der Polymerfolie (2) angeordneten Absorberschicht (4) , die einen Absorberfarbstoff aufweist, der dazu eingerichtet ist, einen zum Eingeben von Information dienenden Schreibstrahl zumindest teilweise zu absorbieren und die dabei erzeugte Wärme zumindest teilweise lokal an die Polymerfolie (2) abzugeben.

2. Holographischer Datenspeicher nach Anspruch 1, **dadurch gekennzeichnet, dass** unterhalb der Absorberschicht (4) eine Klebstoffschicht (6) angeordnet ist.

3. Holographischer Datenspeicher nach Anspruch 1 oder 2, **dadurch gekennzeichnet, dass** zwischen der Speicherschicht (2) und der Absorberschicht (4) eine teildurchlässige Reflexionsschicht (8) angeordnet ist.

4. Holographischer Datenspeicher nach Anspruch 3, **dadurch gekennzeichnet, dass** die Reflexionsschicht (8) eine Dicke im Bereich von 1 nm bis 50 nm hat.

5. Holographischer Datenspeicher nach Anspruch 1 oder 2, **dadurch gekennzeichnet, dass** unterhalb der Absorberschicht (4') eine Reflexionsschicht (8') angeordnet ist.

6. Holographischer Datenspeicher nach einem der Ansprüche 3 bis 5, **dadurch gekennzeichnet, dass** die Reflexionsschicht (8, 8') Aluminium aufweist.

7. Holographischer Datenspeicher nach einem der Ansprüche 1 bis 6, **dadurch gekennzeichnet, dass** die Polymerfolie (2) verstreckt ist, vorzugsweise biaxial verstreckt.

8. Holographischer Datenspeicher nach einem der Ansprüche 1 bis 7, **dadurch gekennzeichnet, dass** die Polymerfolie (2) ein Material aufweist, das aus der folgenden Gruppe ausgewählt ist: Polypropylen, Polyvinylchlorid, Polyester, Polyethylenterephthalat, Polyethylennaphthalat, Polymethylpenten, Polyimid.

9. Holographischer Datenspeicher nach einem der Ansprüche 1 bis 8, **dadurch gekennzeichnet, dass** die Absorberschicht (4) ein Bindemittel aufweist.

10. Holographischer Datenspeicher nach einem der Ansprüche 1 bis 9, **dadurch gekennzeichnet, dass** die Brechzahl der Polymerfolie (12) lokal durch Erwärmung veränderbar ist, wobei optische Phaseninformation über die lokale optische Weglänge in der Polymerfolie (12) abspeicherbar ist.

11. Holographischer Datenspeicher nach einem der Ansprüche 1 bis 10, **dadurch gekennzeichnet, dass** die Grenzflächenstruktur der Polymerfolie (32) lokal durch Erwärmung veränderbar ist, wobei holographische Information über die lokale Grenzflächenstruktur der Polymerfolie (32) abspeicherbar ist.

12. Holographischer Datenspeicher nach einem der Ansprüche 1 bis 11, **dadurch gekennzeichnet, dass** der Absorberfarbstoff dazu eingerichtet ist, bei Absorption eines zum Eingeben von Information dienenden Schreibstrahls in seinen optischen Eigenschaften lokal verändert zu werden.

13. Holographischer Datenspeicher nach einem der Ansprüche 1 bis 12, **gekennzeichnet durch** gespeicherte holographische Information.

14. Verwendung eines Datenspeichers mit einer als Speicherschicht eingerichteten Polymerfolie (2), die lokal durch Erwärmung veränderbar ist und die als Decklage des Datenspeichers (1; 1') eingerichtet ist, und mit einer unterhalb der Polymerfolie (2) angeordneten Absorberschicht (4), die einen Absorberfarbstoff aufweist, der dazu eingerichtet ist, einen zum Eingeben von Information dienenden Schreibstrahl zumindest teilweise zu absorbieren'und die dabei erzeugte Wärme zumindest teilweise lokal an die Polymerfolie (2) abzugeben, als holographischer Datenspeicher.

15. Verwendung nach Anspruch 14, **dadurch gekennzeichnet, dass** der Datenspeicher (1; 1') die Merkmale des holographischen Datenspeichers nach einem der Ansprüche 2 bis 9 aufweist.

16. Verwendung nach Anspruch 14 oder 15, **dadurch gekennzeichnet, dass** die Brechzahl der Polymerfolie (12) lokal durch Erwärmung veränderbar ist, wobei optische Phaseninformation über die lokale optische Weglänge in der Polymerfolie (12) abspeicherbar ist und wobei vorzugsweise die Polymerfolie (12) beim Auslesen von Information in Transmission durchstrahlt wird.

17. Verwendung nach einem der Ansprüche 14 bis 16, **dadurch gekennzeichnet, dass** die Grenzflächenstruktur der Polymerfolie (32) lokal durch Erwärmung veränderbar ist, wobei holographische Information über die lokale Grenzflächenstruktur der Polymerfolie (32) abspeicherbar ist, vorzugsweise der Grenzfläche auf die Absorberschicht (34) zu.

18. Verwendung nach einem der Ansprüche 14 bis 17, **dadurch gekennzeichnet, dass** der Absorberfarbstoff dazu eingerichtet ist, bei Absorption eines zum Eingeben von Information dienenden Schreibstrahls in seinen optischen Eigenschaften lokal verändert zu werden.

19. Verfahren zum Eingeben von Information in einen holographischen Datenspeicher nach einem der Ansprüche 1 bis 13, wobei in einem Hologramm eines Speicherobjekts enthaltene holographische Information als zweidimensionale Anordnung berechnet wird und ein Schreibstrahl (22) einer Schreibeinrichtung, vorzugsweise eines Laserlithographen, auf die Polymerfolie (12; 32) und/oder die Absorberschicht (14; 34) des Datenspeichers (11; 31) gerichtet und entsprechend der zweidimensionalen Anordnung so angesteuert wird, dass die lokalen Eigenschaften der Polymerfolie (12; 32) gemäß der holographischen Information eingestellt werden.

20. Verfahren nach Anspruch 19, **dadurch gekennzeichnet, dass** der Schreibstrahl'(22) von der Seite der Decklage (12; 32) her auf den holographischen Datenspeicher (11; 31) gerichtet wird.

21. Verfahren nach Anspruch 19 oder 20, wobei der holographische Datenspeicher (11; 31) eine teildurchlässige Reflexionsschicht (18; 38) gemäß Anspruch 3 hat, **dadurch gekennzeichnet, dass** zum Fokussieren des Schreibstrahls (22) dessen von der Reflexionsschicht (18; 38) zurückgeworfener Reflex ausgewertet wird.

22. Verfahren nach einem der Ansprüche 19 bis 21, **dadurch gekennzeichnet, dass** die holographische Information in Form von Pits (20; 40) vorgegebener Größe eingegeben wird.

23. Verfahren nach Anspruch 22, **dadurch gekennzeichnet, dass** in einem Pit (20; 40) die holographische Information in binär kodierter Form gespeichert wird.

24. Verfahren nach Anspruch 22, **dadurch gekennzeichnet, dass** in einem Pit (20; 40) die holographische Information in kontinuierlich kodierter Form gespeichert wird, wobei die lokalen Eigenschaften der Polymerfolie (12; 32) in dem Pit (20; 40) gemäß einem Wert aus einem vorgegebenen Wertebereich eingestellt werden.

25. Verfahren zum Auslesen von Information aus einem holographischen Datenspeicher nach einem der Ansprüche 1 bis 13, wobei Licht (24; 46, 47), vorzugsweise kohärentes Licht, großflächig auf die Speicherschicht (12; 32) des Datenspeichers (11; 31) gerichtet wird und als Rekonstruktion der in dem bestrahlten Bereich enthaltenen Information ein holographisches Bild in einem Abstand zu dem Datenspeicher (11; 31) erfasst wird.

## Claims

1. A holographic data storage medium, comprising a polymer film (2) which is set up as a storage layer, which can be changed locally by heating and which is set up as a top layer of the data storage medium (1; 1'), and comprising an absorber layer (4) which is arranged underneath the polymer film (2) and has an absorber dye which is set up to at least partly absorb a write beam serving to put information in and to discharge the heat produced in the process at least partly locally to the polymer film (2).

2. The holographic data storage medium as claimed in claim 1, **characterized in that** an adhesive layer (6) is arranged underneath the absorber layer (4).

3. The holographic data storage medium as claimed in claim 1 or 2, **characterized in that** a partly transparent reflective layer (8) is arranged between the storage layer (2) and the absorber layer (4).

4. The holographic data storage medium as claimed in claim 3, **characterized in that** the reflective layer (8) has a thickness in the range from 1 nm to 50 nm.

5. The holographic data storage medium as claimed in claim 1 or 2, **characterized in that** a reflective layer (8') is arranged underneath the absorber layer (4').

6. The holographic data storage medium as claimed in one of claims 3 to 5, **characterized in that** the reflective layer (8, 8') has aluminum.

7. The holographic data storage medium as claimed in one of claims 1 to 6, **characterized in that** the polymer film (2) is oriented, preferably biaxially oriented.

8. The holographic data storage medium as claimed in one of claims 1 to 7, **characterized in that** the polymer film (2) has a material which is selected from the following group: polypropylene, polyvinylchloride, polyester, polyethylene terephthalate, polyethylene naphthalate, polymethylpentene, polyimide.

9. The holographic data storage medium as claimed in one of claims 1 to 8, **characterized in that** the absorber layer (4) has a binder.

10. The holographic data storage medium as claimed in one of claims 1 to 9, **characterized in that** the refractive index of the polymer film (12) can be changed locally by heating, it being possible for optical phase information to be stored via the local optical path length in the polymer film (12).

11. The holographic data storage medium as claimed in one of claims 1 to 10, **characterized in that** the interface structure of the polymer film (32) can be changed locally by heating, it being possible for holographic information to be stored via the local interface structure of the polymer film (32).

12. The holographic data storage medium as claimed in one of claims 1 to 11, **characterized in that** the absorber dye is set up such that its optical properties can be changed locally when it absorbs a write beam serving to put information in.

13. The holographic data storage medium as claimed in one of claims 1 to 12, **characterized by** stored holographic information.

14. Use of a data storage medium comprising a polymer film (2) which is set up as a storage layer, can be changed locally by heating and which is set up as a top layer of the data storage medium (1; 1'), and comprising an absorber layer (4) which is arranged underneath the polymer film (2) and has an absorber dye which is set up to at least partly absorb a write beam serving to put information in and to discharge the heat produced in the process at least partly locally to the polymer film (2), as a holographic data storage medium.

15. The use as claimed in claim 14, **characterized in that** the data storage medium (1; 1') has the features of the holographic data storage medium as claimed in one of claims 2 to 9.

16. The use as claimed in claim 14 or 15, **characterized in that** the refractive index of the polymer film (12) can be changed locally by heating, it being possible for optical phase information to be stored via the local optical path length in the polymer film (12) and the polymer film (12) preferably being transilluminated in transmission when reading out information.

17. The use as claimed in one of claims 14 to 16, **characterized in that** the interface structure of the polymer film (32) can be changed locally by heating, it being possible for holographic information to be stored via the local interface structure of the polymer film (32), preferably the interface to the absorber layer (34).

18. The use as claimed in one of claims 14 to 17, **characterized in that** the absorber dye is set up such that its optical properties can be changed locally when it absorbs a write beam serving to put information in.

19. A method of putting information into a holographic data storage medium as claimed in one of claims 1 to 13, holographic information contained in a hologram of a stored object being calculated as a two-dimensional array and a write beam (22) from a writing device, preferably a laser lithograph, being aimed at the polymer film (12; 32) and/or the absorber layer (14; 34) of the data storage medium (11; 31) and being driven in accordance with the two-dimensional array such that the local properties of the polymer film (12; 32) are set in accordance with the holographic information.

20. The method as claimed in claim 19, **characterized in that** the write beam (22) is aimed at the holographic data storage medium (11; 31) from the side of the top layer (12; 32) .

21. The method as claimed in claim 19 or 20, the holographic data storage medium (11; 31) having a partly transparent reflective layer (18; 38) as claimed in claim 3, **characterized in that**, in order to focus the write beam (22), its reflection from the reflective layer (18; 38) is evaluated.

22. The method as claimed in one of claims 19 to 21, **characterized in that** the holographic information is put in in the form of pits (20; 40) of predefined size.

23. The method as claimed in claim 22, **characterized in that** the holographic information is stored in a pit (20; 40) in a binary encoded form.

24. The method as claimed in claim 22, **characterized in that** the holographic information is stored in a pit (20; 40) in continuously encoded form, the local properties of the polymer film (12; 32) in the pit (20; 40) being set in accordance with a value from a predefined value range.

25. A method of reading information out of a holographic data storage medium as claimed in one of claims 1 to 13, light (24; 46, 47), preferably coherent light, being aimed at a large area of the storage layer (12; 32) of the data storage medium (11; 31) and a holographic image being registered at a distance from the data storage medium (11; 31) as a reconstruction of the information contained in the irradiated region.

## Revendications

1. Mémoire holographique de données, comportant une feuille polymère (2) organisée comme couche mémoire, qui est modifiable localement par chauffage et qui est organisée comme couche de protection de la mémoire de données (1 ; 1'), et comportant une couche absorbante (4) disposée en dessous de la feuille polymère (2), qui présente un colorant absorbant qui est organisé pour absorber au moins partiellement le faisceau d'écriture servant à saisir l'information et pour restituer la chaleur ainsi formée au moins partiellement localement à la feuille polymère (2).

2. Mémoire holographique de données selon la revendication 1, **caractérisée en ce qu'**une couche de colle (6) est disposée en dessous de la couche absorbante (4) .

3. Mémoire holographique de données selon la revendication 1 ou 2, **caractérisée en ce qu'**une couche réfléchissante partiellement transparente (8) est disposée entre la couche mémoire (2) et la couche absorbante (4) .

4. Mémoire holographique de données selon la revendication 3, **caractérisée en ce que** la couche réfléchissante (8) présente une épaisseur dans le domaine de 1 nm à 50 nm.

5. Mémoire holographique de données selon la revendication 1 ou 2, **caractérisée en ce qu'**une couche réfléchissante (8') est disposée en dessous de la couche absorbante (4') .

6. Mémoire holographique de données selon l'une des revendications 3 à 5, **caractérisée en ce que** la couche réfléchissante (8, 8') comporte de l'aluminium.

7. Mémoire holographique de données selon l'une des revendications 1 à 6, **caractérisée en ce que** la feuille polymère (2) est étirée, de préférence étirée de manière biaxiale.

8. Mémoire holographique de données selon l'une des revendications 1 à 7, **caractérisée en ce que** la feuille polymère (2) comporte un matériau qui est choisi dans le groupe suivant : polypropylène, chlorure de polyvinyle, polyester, téréphtalate de polyéthylène, naphtalate de polyéthylène, polyméthylpentène, polyimide.

9. Mémoire holographique de données selon l'une des revendications 1 à 8, **caractérisée en ce que** la couche absorbante (4) comporte un liant.

10. Mémoire holographique de données selon l'une des revendications 1 à 9, **caractérisée en ce que** l'indice de réfraction de la feuille polymère (12) est localement modifiable par chauffage, une information de phase optique pouvant être stockée sur le parcours du chemin optique local dans la feuille polymère (12).

11. Mémoire holographique de données selon l'une des revendications 1 à 10, **caractérisée en ce que** la structure interfaciale de la feuille polymère (32) est localement modifiable par chauffage, une information holographique pouvant être stockée par la structure interfaciale locale de la feuille polymère (32).

12. Mémoire holographique de données selon l'une des revendications 1 à 11, **caractérisée en ce que** le colorant absorbant est organisé pour avoir ses propriétés optiques modifiées localement pendant l'absorption d'un faisceau d'écriture servant à saisir l'information.

13. Mémoire holographique de données selon l'une des revendications 1 à 12, **caractérisée par** l'information holographique stockée.

14. Utilisation d'une mémoire de données comportant une feuille polymère (2) organisée comme couche mémoire, qui est modifiable localement par chauffage et qui est organisée comme couche de protection de la mémoire de données (1 ; 1'), et comportant une couche absorbante (4) disposée en dessous de la feuille polymère (2), qui présente un colorant absorbant qui est organisé pour absorber au moins partiellement le faisceau d'écriture servant à saisir l'information et pour restituer la chaleur ainsi formée au moins partiellement localement à la feuille polymère (2), comme mémoire holographique de données.

15. Utilisation selon la revendication 14, **caractérisée en ce que** la mémoire de données (1; 1') présente les caractéristiques de la mémoire holographique de données selon l'une des revendications 2 à 9.

16. Utilisation selon la revendication 14 ou 15, **caractérisée en ce que** l'indice de réfraction de la feuille polymère (12) est localement modifiable par chauffage, l'information de phase optique pouvant être stockée sur le parcours du chemin optique local dans la feuille polymère (12) et la feuille polymère (12) étant de préférence éclairée en transmission pendant l'extraction d'information.

17. Utilisation selon l'une des revendications 14 à 16, **caractérisée en ce que** la structure interfaciale de la feuille polymère (32) est modifiable localement par chauffage, l'information holographique pouvant être stockée par la structure interfaciale locale de la feuille polymère (32), de préférence l'interface sur la couche absorbante (34).

18. Utilisation selon l'une des revendications 14 à 17, **caractérisée en ce que** le colorant absorbant est organisé pour avoir ses propriétés optiques modifiées localement pendant l'absorption d'un faisceau d'écriture servant à saisir l'information.

19. Procédé de saisie d'information dans une mémoire de données holographique selon l'une des revendications 1 à 13, où l'information holographique contenue dans un hologramme d'un objet mémoire est agencée comme arrangement bidimensionnel et un faisceau d'écriture (22) d'un dispositif d'écriture, de préférence d'un lithographe laser, est orienté sur la feuille polymère (12; 32) et/ou la couche absorbante (14 ; 34) de la mémoire de données (11 ; 31) et est dirigé conformément à la disposition bidimensionnelle, de telle manière que les propriétés locales de la feuille polymère (12 ; 32) soient réglées selon l'information holographique.

20. Procédé selon la revendication 19, **caractérisé en ce que** le faisceau d'écriture (22) est dirigé sur la mémoire holographique de données (11 ; 31) en venant du côté de la couche de protection (12 ; 32).

21. Procédé selon la revendication 19 ou 20, dans lequel la mémoire holographique de données (11 ; 31) présente une couche réfléchissante (18 ; 38) partiellement transparente selon la revendication 3, **caractérisé en ce que** sa réflexion réfléchie à partir de la couche réfléchissante (18; 38) est exploitée pour focaliser le faisceau-d'écriture (22).

22. Procédé selon l'une des revendications 19 à 21, **caractérisé en ce que** l'information holographique est saisie sous forme de creux (20 ; 40) de grandeur prédéfinie.

23. Procédé selon la revendication 22, **caractérisé en ce que**, dans un creux (20 ; 40), l'information holographique est stockée sous forme codée binaire.

24. Procédé selon la revendication 22, **caractérisé en ce que**, dans un creux (20 ; 40), l'information holographique est stockée sous forme codée de façon continue, les informations locales de la feuille polymère (12 *;* 32) étant enregistrées dans le creux (20 *;* 40) selon une valeur appartenant à un domaine de valeurs prédéfini.

25. Procédé de lecture d'information à partir d'une mémoire holographique de données selon l'une des revendications 1 à 13, dans lequel de la lumière (2-4 ; 46, 47), de préférence de la lumière cohérente, est dirigée, de façon large, vers la surface mémoire (12 ; 32) de la mémoire de données (11 ; 31) et une image holographique est saisie à une certaine distance de la mémoire de données (11 ; 31), en tant que reconstruction de l'information contenue dans le domaine irradié.
